(19) Europäisches Patentamt
European Patent Office
Office européen des brevets

(11) **EP 2 736 944 B1**

(12) **EUROPEAN PATENT SPECIFICATION**

(45) Date of publication and mention
of the grant of the patent:
**21.12.2016 Bulletin 2016/51**

(21) Application number: **12820546.5**

(22) Date of filing: **27.07.2012**

(51) Int Cl.:
**C08G 63/81** (2006.01)     **C08G 63/82** (2006.01)

(86) International application number:
**PCT/JP2012/069777**

(87) International publication number:
**WO 2013/018874 (07.02.2013 Gazette 2013/06)**

(54) **METHOD FOR PRODUCING POLYMER**

VERFAHREN ZUR POLYMERHERSTELLUNG

PROCÉDÉ DE PRODUCTION D'UN POLYMÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.07.2011 JP 2011166639
14.02.2012 JP 2012029293**

(43) Date of publication of application:
**04.06.2014 Bulletin 2014/23**

(73) Proprietor: **Ricoh Company, Ltd.
Tokyo 143-8555 (JP)**

(72) Inventors:
• **NEMOTO, Taichi
Tokyo 143-8555 (JP)**
• **TANAKA, Chiaki
Tokyo 143-8555 (JP)**
• **YAMAUCHI, Yoshitaka
Tokyo 143-8555 (JP)**

(74) Representative: **Lamb, Martin John Carstairs
Marks & Clerk LLP
90 Long Acre
London WC2E 9RA (GB)**

(56) References cited:
EP-A1- 2 365 016     JP-A- 2004 277 698
JP-A- 2008 002 048

• IDRISS BLAKEY ET AL: "Controlled
polymerisation of lactide using an
organo-catalyst in supercritical carbon dioxide",
GREEN CHEMISTRY, vol. 13, no. 8, 23 June 2011
(2011-06-23), page 2032, XP055167449, ISSN:
1463-9262, DOI: 10.1039/c1gc15344g
• BAS G G LOHMEIJER ET AL: "Guanidine and
Amindine Organocatalysts for Ring-opening
Polymerization of Cyclic Esters",
MACROMOLECULES, AMERICAN CHEMICAL
SOCIETY, vol. 39, no. 25, 11 November 2006
(2006-11-11), pages 8574-8583, XP002638869,
ISSN: 0024-9297, DOI: 10.1021/MA0619381
[retrieved on 2006-11-11]
• DAVID D. HILE: 'RING-OPENING PRECIPITATION
POLYMERIZATION OF
POLY(D,L-LACTIDE-CO-GLYCOLIDE) IN
SUPERCRITICAL CARBON DIOXIDE'
MACROMOL. RAPID COMMUN. vol. 20, no. 10,
October 1999, pages 511 - 514, XP000896643
• DAVID D. HILE, MICHAEL V. PISHKO: 'Emulsion
copolymerization of D,L-lactide and glycolide in
supercritical carbon dioxide' JOURNAL OF
POLYMER SCIENCE PART A: POLYMER
CHEMISTRY vol. 39, 2001, pages 562 - 570,
XP055124391

EP 2 736 944 B1

**Description**

Technical Field

The present invention relates to a method for producing a polymer through ring-opening polymerization of a ring-opening polymerizable monomer.

Background Art

Conventionally known methods for producing polymers involve ring-opening polymerization of a ring-opening polymerizable monomer, such as lactide and ε-caprolactone, to produce a polymer. For example, polylactic acid, which has been known as a biodegradable plastic, is produced by adding, as one example of metal catalysts, tin octylate to lactide of lactic acid, and melt-polymerizing the lactide at about 200°C under atmospheric or reduced pressure in an inert gas atmosphere.

When a polymer is produced by the above-described method, not only that a large quantity of energy is consumed, but also a large amount of residues remains because the melt polymerization is performed at high temperature.

When polylactic acid is generated by melt polymerization at high temperature, about 200°C, for example, several percents by mass of lactide remain in the polylactic acid. This is because an equilibrium relationship is established in a reaction system of ring-opening polymerization of polylactic acid or the like, and therefore a ring-opening polymerizable monomer tends to be generated by a depolymerization reaction, which is a reverse reaction of a ring-opening polymerization reaction, when it is polymerizaed at high temperature. The ring-opening polymerizable monomer acts as a catalyst for hydrolysis of the generated polymer product, or may impair thermal resistance of the polymer product. Therefore, a treatment is performed on the polymer product to thereby remove the ring-opening polymerizable monomer from the polymer product.

For example, there is disclosed a production method containing a first step for producing a prepolymer by proceeding to a polymerization reaction until a residual lactide content in a polymerization system reduced to the range of 3% by mass to 15% by mass, and a second step for providing the prepolymer in the melted state into the atmosphere of the reduced pressure to thereby reduce the lactide (see PTL 1). This production method, however, increases a number of steps and consumed energy, or leads to low yield.

Meanwhile, there have been attempts for producing polylactic acid in the presence of a compound that is substantially free from a metal. For example, there is disclosed a method in which lactide is allowed to carry out ring-opening polymerization in a methylene chloride solution in the presence of a compound having a guanidine skeleton (see PTL 2). When polylactic acid is produced by this method, however, it is necessary to dry and remove methylene chloride at high temperature. As a result of this, not only that a large quantity of energy is required, lactide generated by a depolymerization reaction remains a resulting polymer, if temperature for drying is high.

There is also disclosed a method in which supercritical carbon dioxide is used as a solvent (see NPL 1). In accordance with this method, carbon dioxide used as the solvent can be easily removed from a generated polymer product. In this method, however, a reaction time is long, which is 24 hours or longer, and a polymerization rate of lactide (a rate of lactide converted into polylactic acid) is 85% by mass, because of which it is difficult to use the resulting reaction product in a molding process or the like as it is.

Further, there is also proposed a method in which supercritical carbon dioxide is used as a solvent, and an organic catalyst is charged and used together with raw materials (see NPL 2). In this method, the supercritical carbon dioxide, the monomer as the raw material and the organic catalyst are all charged and used together. This method is not practical as the polymerization reaction time is long, which is 16 hours, and an obtainable number average molecular weight of a generated polymer is only up to about 10,000. In accordance with this method, moreover, a high molecular weight polymer cannot be easily attained as a reaction proceeds locally. Since a reaction proceeds unevenly in this method, a polymer of targeted properties may not be attained when L-, and D-racemates are synthesized, or a copolymerization reaction is performed with other components.

By performing the method of NRL2, the polymerization reaction performs non-uniformly. Therefore, the polymer with the desirable property cannot always be obtained in case of copolymerizing D-optical isomer and L-optical isomer or when copolymerizing other plural monomers.

In NPL4, a method for the polymerization of the ring-opening polymerizable monomer such as lactide, δ-valerolactone and ε-caprolactone by using organic catalyst such as DBU as described. However, in NPL4, the method of the polymerization of the ring-opening polymerizable monomer using a compressive fluid is not described. Furthermore, the timing of addition of organic catalyst in the method is not described.

In PTL3, a method of producing polymer particles is described in ring-opening polymerizable monomer such as lactide, ε-caprolactone is polymerized and granulated in the compressive fluid in the presence of surfactant using organic catalyst such as DBU. However, in this method, the compressive fluid, monomer and organic catalyst are charged and used together.

Citation List

Patent Literature

PTL 1: Japanese Patent Application Laid-Open (JP-A) No. 2008-63420
PTL 2: JP-A No. 2009-1614
PTL3: EP-A-2365016

Non-Patent Literature

NPL 1: Ganapathy, H. S.; Hwang, H. S.; Jeong, Y. T.; LEE, W-T.; Lim, K. T., Eur Polym J., 2007, 43(1), 119-126.
NPL 2: Idriss Blakey, Anguang Yu, Steven M. Howdle, Andrew K. Whittakera and Kristofer J. Thurechta, Green Chemistry, 2011, Advance Article
NPL 3: "The Latest Applied Technology of Supercritical Fluid (CHO RINKAI RYUTAI NO SAISHIN OUYOU GIJUTSU)," p. 173, published by NTS Inc. on March 15, 2004
NPL4: Bas G G Lohmeijer et al: "Guanidine and Aminidine Organocatalysts for Ring-opening Polymerization of Cyclic Esters", MACROMOLECULES, AMERICAN CHEMICAL SOCIETY, vol.39, no.25, 11 November 2006 (2006-11-11), pages 8574-8583.

Summary of Invention

Technical Problem

In accordance with conventional production methods for forming a polymer by ring-opening polymerization of a ring-opening polymerizable monomer, there are problems that it is necessary to remove residues from a product generated as a polymer, since an organic solvent remains in the generated product. In the case where carbon dioxide is used for polymerization as a solvent for the polymerization reaction, moreover, a reaction time is long, and a molecular weight of an obtained resin is small, and thus it is not practical.

Solution to Problem

A means for solving the aforementioned problems is as follows.
A method for producing a polymer, which contains:

bringing a compressive fluid and a ring-opening polymerizable monomer into contact with each other to melt the ring-opening polymerizable monomer, followed by adding a catalyst thereto, to thereby allow the ring-opening polymerizable monomer to carry out ring-opening polymerization.

Advantageous Effects of Invention

As described above, the method for producing a polymer of the present invention contains bringing a compressive fluid and a ring-opening polymerizable monomer into contact with each other, followed by adding a catalyst thereto, to thereby allow the ring-opening polymerizable monomer to carry out ring-opening polymerization. In accordance with this production method, the ring-opening polymerizable monomer can be polymerized without using an organic solvent. Therefore, it is not necessary to remove the organic solvent from a generated product. In accordance with this production method, moreover, a reaction time is reduced compared to that in a conventional production method using carbon dioxide as a solvent.

Brief Description of Drawings

FIG. 1 is a general phase diagram depicting the state of a substance depending on pressure and temperature conditions.

FIG. 2 is a phase diagram which defines a compressive fluid used in the present invention.

FIG. 3 is a system diagram illustrating one example of the polymerization process in the production method of the present invention.

FIG. 4 is a system diagram illustrating one example of the polymerization process of a batch system

Description of Embodiments

(Method for Producing Polymer)

One embodiment of the present invention will be specifically explained hereinafter.

The method for producing a polymer of the present invention contains bringing a compressive fluid and a ring-opening polymerizable monomer into contact with each other, followed by adding a catalyst thereto, to thereby allow the ring-opening polymerizable monomer to carry out ring-opening polymerization.

«Materials»

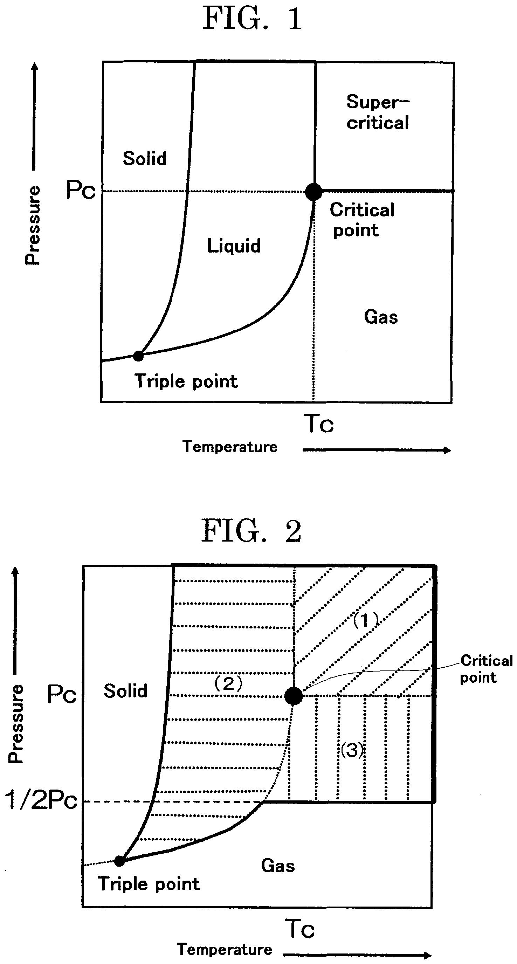

First, a ring-opening polymerizable monomer, a catalyst, other raw materials, and a compressive fluid used in the aforementioned production method will be explained with reference to drawings. FIG. 1 is a general phase diagram depicting the state of a substance depending on pressure and temperature conditions. FIG. 2 is a phase diagram which defines a compressive fluid used in the present invention. Note that, in the present embodiment, the raw materials are base materials for producing a polymer, and become constitutional components of the polymer.

<Ring-Opening Polymerizable Monomer>

The ring-opening polymerizable monomer is appropriately selected depending on a combination of the ring-opening polymerizable monomer and compressive fluid for use without any limitation, but it is preferably a ring-opening polymerizable monomer having a ring structure containing a carbonyl skeleton, such as an ester bond. The carbonyl skeleton is formed with oxygen, which has high electronegativity, and carbon bonded together with a $\pi$-bond. Because of electrons of the $\pi$-bond, oxygen is negatively polarized, and carbon is positively polarized, and therefore reactivity is enhanced. In the case where the compressive fluid is carbon dioxide, it is assumed that affinity between carbon dioxide and a generated polymer is high, as the carbonyl skeleton is similar to the structure of carbon dioxide. As a result of these functions, a plasticizing effect of the generated polymer using the compressive fluid is enhanced. Specific examples of the ring-opening polymerizable monomer include cyclic ester, and cyclic carbonate. These may be used independently or in combination.

The cyclic ester is appropriately selected depending on the intended purpose without any limitation, but it is preferably a cyclic dimer obtained through dehydration-condensation of an L-form and/or D form of a compound represented by General Formula 1.

$$R\text{-}C^*\text{-}H(\text{-}OH)(\text{-}COOH) \qquad \text{General Formula 1}$$

In General Formula 1, R is a C1-C10 alkyl group, and* represents an asymmetric carbon.

Specific examples of the compound represented by General Formula 1 are appropriately selected depending on the intended purpose without any limitation. Examples thereof include enantiomers of lactic acid, enantiomers of 2-hydroxybutanoic acid, enantiomers of 2-hydroxypentanoic acid, enantiomers of 2-hydroxyhexanoic acid, enantiomers of 2-hydroxyheptanoic acid, enantiomers of 2-hydroxyoctanoic acid, enantiomers of 2-hydroxynonanoic acid, enantiomers of 2-hydroxydecanoic acid, enantiomers of 2-hydroxyundecanoic acid, and enantiomers of 2-hydroxydodecanoic acid. Among them, enantiomers of lactic acid are preferable since they are highly reactive and readily available. These cyclic dimers may be used independently or in combination.

The usable cyclic ester other than the compound represented by General Formula 1 is appropriately selected depending on the intended purpose without any limitation, and examples thereof include aliphatic lactone, such as $\beta$-propiolactone, $\beta$-butyrolactone, $\gamma$-butyrolactone, $\gamma$-hexanolactone, $\gamma$-octanolactone, $\delta$-valerolactone, $\delta$-hexanolactone, $\delta$-octanolactone, $\delta$-caprolactone, $\delta$-dodecanolactone, $\alpha$-methyl-$\gamma$-butyrolactone, $\beta$-methyl-$\delta$-valerolactone, glycolide and lactide. Among them, $\varepsilon$-caprolactone is preferable since it is highly reactive and readily available.

The cyclic carbonate is appropriately selected depending on the intended purpose without any limitation, and examples thereof include ethylene carbonate, and propylene carbonate.

In the method for producing a polymer of the present invention, there are hardly any monomer residues, and the reaction is progressed quantitatively. Therefore, a block-type copolymer can be synthesized with only one step, by appropriately setting the timing for adding various types of ring-opening polymerizable monomers.

<Compressive Fluid>

The term "compressive fluid" refers to a substance present in any one of the regions (1), (2) and (3) of FIG. 2 in the phase diagram of FIG. 1. In FIGs. 1 and 2, Pc denotes critical pressure, and Tc denotes critical temperature.

In such regions, the substance is known to have extremely high density and show different behaviors from those shown at normal temperature and normal pressure.

The substance present in the region (1) is a supercritical fluid. The supercritical fluid is a fluid that exists as a noncondensable high-density fluid at temperature and pressure exceeding the corresponding critical points, which are limiting points at which a gas and a liquid can coexist. Also, the supercritical fluid does not condense even when compressed, and exists at a critical temperature or higher and a critical pressure or higher.

The substance present in the region (2) is a liquid, but in the present invention, it is a liquefied gas obtained by compressing a substance existing as a gas at normal temperature (25°C) and normal pressure (1 atm).

The substance present in the region (3) is a gas, but in the present invention, it is a high-pressure gas whose pressure is 1/2 or higher than the critical pressure (e.g., 1/2 Pc or higher).

A substance used in the state of the compressive fluid is appropriately selected depending on the intended purpose without any limitation, and examples thereof include carbon monoxide, carbon dioxide, dinitrogen oxide, nitrogen, methane, ethane, propane, 2,3-dimethylbutane, and ethylene. These may be used independently or in combination. Among them, carbon dioxide is preferable because the critical pressure and critical temperature of carbon dioxide are respectively about 7.4 MPa, and about 31°C, and thus a supercritical state of carbon dioxide is easily formed. In addition, carbon dioxide is non-flammable, and therefore it is easily handled.

In the case where supercritical carbon dioxide is used as a solvent, it has been conventionally considered that carbon dioxide is not suitable for living anionic polymerization, as it may react with basic and nucleophilic substances (see NPL 3).

The present inventors have found that, overturning the conventional insight, a polymerization reaction progresses quantatively by stably coordinating a basic and nucleophilic organic catalyst with a ring-opening monomer to open the ring structure thereof, and as a result, the polymerization reaction progresses livingly.

In the present specification, the term "living" means that the reaction progresses quantitatively without a side reaction such as a transfer reaction or termination reaction, so that a molecular weight distribution of an obtained polymer is relatively narrow compared to that of the polymer obtained by melt polymerization, and is monodispersible.

<Catalyst>

The catalyst is appropriately selected depending on the intended purpose without any limitation, and for example, it may be a metal catalyst containing a metal atom, or an organic catalyst free from a metal atom.

The metal catalyst is appropriately selected depending on the intended purpose without any limitation, and examples thereof include: a tin compound, such as tin octylate, tin dibutylate; an aluminum compound, such as aluminum acetylacetonate, and aluminum acetate; a titanium compound, such as tetraisopropyl titanate, and tetrabutyl titanate; a zirconium compound, such as zirconium isopropoxide; and an antimony compound, such as antimony trioxide.

The catalyst is preferably a metal atom-free organic compound (organic catalyst) for applications which require safety and stability of a generated product. The organic catalyst may be any organic catalyst, provided that it contributes to a ring-opening reaction of the ring-opening polymerizable monomer to form an active intermediate together with the ring-opening polymerizable monomer, and it then can be removed and regenerated through a reaction with alcohol.

The organic catalyst is preferably a compound having basicity and serving as a nucleophilic agent, more preferably a basic compound containing a nucleophilic nitrogen atom (a basic nucleophilic nitrogen compound), and even more preferably a nitrogen atom-containing cyclic compound. A cationic organic catalyst can be used for the aforementioned ring-opening polymerization reaction, but the cationic organic catalyst pulls hydrogen atoms out of the polymer backbone (back-biting). As a result, a resulting polymer tends to have a wide molecular weight distribution, and it is difficult to obtain a high molecular weight polymer.

The nitrogen atom-containing cyclic compound is appropriately selected depending on the intended purpose without any limitation. The nitrogen atom-containing cyclic compound preferably includes cyclic monoamine, cyclic diamine (a cyclic diamine compound having an amidine skeleton), a cyclic triamine compound having a guanidine skeleton, and a heterocyclic compound containing a nitrogen atom.

The cyclic monoamine is appropriately selected depending on the intended purpose without any limitation, and examples thereof include quinuclidine.

The cyclic diamine is appropriately selected depending on the intended purpose without any limitation, and examples thereof include 1,4-diazabicyclo[2.2.2]octane (DABCO) and 1,5-diazabicyclo(4,3,0)nonene-5.

The cyclic diamine compound having an amidine skeleton includes 1,8-diazabicyclo[5.4.0]undec-7-ene (DBU) and diazabicyclononene.

The cyclic triamine compound having a guanidine skeleton is appropriately selected depending on the intended purpose without any limitation, and examples thereof include 1,5,7-triazabicyclo[4.4.0]dec-5-ene (TBD) and diphenylguanidine (DPG).

The heterocyclic compound containing a nitrogen atom is appropriately selected depending on the intended purpose without any limitation, and examples thereof include a heterocyclic aromatic organic compound containing a nitrogen atom, and N-heterocyclic carbine.

The heterocyclic aromatic organic compound containing a nitrogen atom is appropriately selected depending on the intended purpose without any limitation, and examples thereof include N,N-dimethyl-4-aminopyridine (DMAP), 4-pyrrolidinopyridine (PPY), pyrrocolin, imidazol, pyrimidine and purine.

The N-heterocyclic carbine is appropriately selected depending on the intended purpose without any limitation, and examples thereof include 1,3-di-tert-butylimidazol-2-ylldene (ITBU).

Among them, DABCO, DBU, DPG, TBD, DMAP, PPY, and ITBU are preferable, as they have high nucleophilicity without being greatly affected by steric hindrance, or they have such boiling points that they can removed under the reduced pressure.

Among these organic catalysts, for example, DBU is liquid at room temperature, and has a boiling point.

In the case where such organic catalyst is selected for use, the organic catalyst can be removed substantially quantitatively from the obtained polymer by treating the polymer under the reduced pressure. Note that, the type of the organic solvent, or whether or not a removal treatment is performed, is determined depending on an intended use of a generated polymer product.

An amount of the organic catalyst for use cannot be determined unconditionally as it varies depending on a combination of the compressive fluid and the ring-opening polymerizable monomer for use, but it is preferably 0.01 mol% to 15 mol%, more preferably 0.1 mol% to 1 mol%, and even more preferably 0.3 mol% to 0.5 mol%, relative to 100 mol% of the ring-opening polymerizable monomer. When the amount thereof is smaller than 0.01 mol%, the organic catalyst is deactivated before completion of the polymerization reaction, and as a result a polymer having a target molecular weight cannot be obtained in some cases. When the amount thereof is greater than 15 mol%, it may be difficult to control the polymerization reaction.

<Ring-Opening Polymerization Initiator>

The ring-opening polymerization initiator is preferably used for controlling a molecular weight of a polymer produced by the method of the present invention.

The ring-opening polymerization initiator is appropriately selected from those known in the art depending on the intended purpose without any limitation, and it is, for example, saturated or unsaturated, aliphatic mono-, di- or polyhydric alcohol.

Specific examples of the ring-opening polymerization initiator are appropriately selected depending on the intended purpose without any limitation. For example, specific examples thereof include: monoalcohol such as methanol, ethanol, propanol, butanol, pentanol, hexanol, heptanol, nonanol, decanol, lauryl alcohol, myristyl alcohol, cetyl alcohol, and stearyl alcohol; dialcohol such as ethylene glycol, 1,2-propanediol, 1,3-propanediol, 1,3-butanediol, 1,4-butanediol, hexanediol, nonanediol, tetramethylene glycol, and polyethylene glycol; polyhydric alcohol such as glycerol, sorbitol, xylitol, ribitol, erythritol, and triethanol amine; and others such as methyl lactate, and ethyl lactate.

As the ring-opening polymerization initiator, a polymer in which an alcohol residue is present at a terminal of polycaprolactonediol or polytetramethylene glycol may be used. A use of such polymer enables synthesis of diblock copolymers and triblock compolymers.

The method for producing a polymer of the present invention can produce a stereo complex of a polymer (e.g., polylactic acid) by utilizing the characteristic of the method that there are hardly any monomer residues in a polymer product produced thereby.

Two methods for synthesizing a stereo complex will be described hereinafter.

A first synthesis method is a method for producing a stereo block copolymer by polymerizing a ring-opening polymerizable monomer (e.g., L-lactide), adding an enantiomer (e.g., D-lactide) of the ring-opening polymerizable monomer after quantitatively completing the reaction, and further performing a polymerization reaction. This method is extremely effective because racemization hardly occurs as a monomer residue content is low and the reaction proceeds at temperature equal to or lower than the melting point thereof, and because the generated product can be attained by a reaction of one step.

A second synthesis method is, for example, a method in which L-form and D-form polymers (e.g., polylactic acid) are each polymerized in a separate compressive fluid in advance, and blending the resultants in the presence of a compressive fluid. Generally, it is highly possible that a polymer (e.g., polylactic acid), even a polymer containing hardly any monomer residue, may be decomposed when it is re-heated and re-melted. The second method is effective because racemization or thermal deterioration of the generated product can be suppressed by blending the compressive fluid and a low viscous mixture containing a polymer at temperature equal to or lower than the melting point.

An amount of the ring-opening polymerization initiator for use is appropriately selected depending on an intended molecular weight of a resulting polymer, but it is preferably 0.05 mol% to 5 mol%, relative to 100 mol% of the ring-opening polymerizable monomer.

In order to prevent a reaction from being initiated unevenly, the ring-opening polymerization initiator is preferably sufficiently mixed with the monomer before the monomer is brought into contact with a polymerization catalyst.

<Additives>

In the method for producing a polymer of the present invention, other additives may be added for ring-opening polymerization, if necessary. The additives are appropriately selected depending on the intended purpose without any limitation, and examples thereof include a surfactant, an antioxidant, a stabilizer, a UV ray-absorber, a pigment, a colorant, inorganic particles, various fillers, a thermal stabilizer, a flame retardant, a crystal nucleating agent, an antistatic agent, a surface wet improving agent, an incineration adjuvant, a lubricant, a natural product, an anticlouding agent, a releasing agent, a plasticizer, and other similar components. If necessary, a polymerization terminator (e.g., benzoic acid, hydrochloric acid, phosphoric acid, metaphosphoric acid, acetic acid and lactic acid) may be used after completion of polymerization reaction.

An amount of the additives is appropriately selected depending on the intended purpose for adding additives, or a type of the additive to be added, without any limitation, but it is preferably 0 parts by mass to 5 parts by mass, relative to 100 parts by mass of the polymer product.

The surfactant is appropriately selected depending on the intended purpose without any limitation, but it is preferably a surfactant which is dissolved in the compressive fluid, and has compatibility to both the compressive fluid and the ring-opening polymerizable monomer. A use of the surfactant can give effects that the polymerization reaction can be uniformly proceeded, and the resultant polymer has a narrow molecular weight distribution and be easily produced as particles.

When the surfactant is present in the polymerization system, the surfactant may be added to the compressive fluid, or may be added to the ring-opening polymerizable monomer. In the case where carbon dioxide is used as the compressive fluid, for example, a surfactant having groups having affinity with carbon dioxide and groups having affinity with the monomer (e.g. a fluorosurfactant, and a silicone surfactant) can be used.

The thermal stabilizer is appropriately selected depending on the intended purpose without any limitation, and examples thereof include epoxidized soybean oil, and carbodiimide.

The antioxidant is appropriately selected depending on the intended purpose without any limitation, and examples thereof include 2,6-di-t-butyl-4-methyl phenol, and butylhydroxyanisol.

The anticlouding agent is appropriately selected depending on the intended purpose without any limitation, and examples thereof include glycerin fatty acid ester, and monostearyl citrate.

The filler is appropriately selected depending on the intended purpose without any limitation, and examples thereof include an UV-ray absorber, a thermal stabilizer, a flame retardant, an internal mold release agent, and those having an effect of a crystal nucleus agent (e.g., clay, talc, and silica).

The pigment is appropriately selected depending on the intended purpose without any limitation, and examples thereof include titanium oxide, carbon black, and ultramarine blue.

«Polymerization Method»

A polymerization of a polymer for use in the present invention will be explained next.

The method for producing a polymer of the present invention contains bringing a compressive fluid and a ring-opening polymerizable monomer into contact with each other, followed by adding a catalyst thereto, to thereby allow the ring-opening polymerizable monomer to carry out ring-opening polymerization.

<Conditions for Polymerization Reaction>

In the conventional art, the timing for adding the catalyst has not been discussed in the ring-opening polymerization method for polymerizing the ring-opening polymerizable monomer in the compressive fluid.

In the present embodiment, the catalyst is added after bringing the ring-opening polymerizable monomer and the compressive fluid into contact with each other to thereby dissolve or melt the ring-opening polymerizable monomer, in order to stabilize a quality of a polymer. Note that, in the present embodiment, "dissolve" means that the raw materials are dissolved in the compressive fluid, and "melt" means that the raw materials or a generated polymer is plasticized or liquidized with swelling as a result of the contact between the raw material or generated polymer and the compressive fluid. When the compressive fluid dissolves the ring-opening polymerizable monomer, a fluid phase is formed. When the compressive fluid melts the ring-opening polymerizable monomer, a melton phase is formed. It is however preferred that a melton phase or fluid phase be formed into one layer in order to uniformly carry out a reaction. In the present embodiment, it is preferred that the ring-opening polymerizable monomer be melted in order to carry out a reaction with a high ratio of the raw materials relative to the compressive fluid. When the catalyst is added before the ring-opening polymerizable monomer is dissolved or melted, polymerization is locally initiated by the organic catalyst, which makes it difficult to control a polymerization reaction. This problem becomes significant especially when a few types of the ring-opening polymerizable monomers or enantiomers of the ring-opening polymerizable monomer are used to randomly copolymerize these monomers.

In order to efficiently dissolve or melt the ring-opening polymerizable monomer, heating may be performed after bringing the ring-opening polymerizable monomer and the compressive fluid into contact with each other, or stirring may be performed after the contact.

Moreover, the ring-opening polymerization and the compressive fluid may be heated or stirred during when they are brought into contact with each other.

In order to dissolve or melt the ring-opening polymerizable monomer surely, for example, the ring-opening polymerizable monomer and the compressive fluid may be brought into contact to each other after the ring-opening polymerizable monomer is heated at the temperature equal to or higher than the melting point thereof to melt the ring-opening polymerizable monomer.

The temperature for dissolving or melting the ring-opening polymerizable monomer in the compressive fluid, or the polymerization reaction temperature of the ring-opening polymerizable monomer varies depending on the compressive fluid for use, pressure thereof, or a combination of the polymerizable monomer and the organic catalyst.

The lower limit of the temperature for dissolving or melting the ring-opening polymerizable monomer, or the lower limit of the temperature of the polymerization reaction is appropriately selected depending on the intended purpose without any limitation, but it is preferably 40°C, more preferably 50°C, and even more preferably 60°C. When these temperatures are lower than 40°C, it may take a long time to dissolve or melt the ring-opening polymerizable monomer in the compressive fluid, depending on a type of the ring-opening polymerizable monomer, dissolution or melting thereof in the compressive fluid may be insufficient, or the organic catalyst may exhibit low activity. As a result, reaction speed may be low during the polymerization, by which the polymerization reaction may not be able to progress quantitatively.

The upper limit of the temperature for dissolving or melting the ring-opening polymerizable monomer, or the upper limit of the temperature of the polymerization reaction is appropriately selected depending on the intended purpose without any limitation, but it is preferably 150°C, more preferably 120°C, and even more preferably 100°C. When these temperatures are higher than 150°C, a depolymerization reaction, which is a reverse reaction of ring-opening polymerization, tends to occur equibliumly, by which the polymerization reaction may not be progressed quantitatively.

In the polymerization method of the present embodiment, the upper limit of the polymerization reaction temperature is 150°C. By setting the upper limit to 150°C, depolymerization, which is a reverse reaction of the ring-opening polymerization, can be inhibited. As a result, a polymer having a less amount of residual ring-opening polymerizable monomer, which cannot be achieved by conventional methods, can be obtained.

In the present embodiment, the polymerization reaction time (average retention time) is appropriately set depending on a target molecular weight of a polymer to be formed, without any limitation. The reaction time of the polymerization performed in a continuous system is appropriately selected depending on the intended purpose without any limitation and it also depends on other conditions. The reaction is, however, generally completed within 10 minutes to 6 hours. This is a short reaction time, which has not been realized before in the polymerization of the ring-opening polymerizable monomer in the compressive fluid. The reaction time of the polymerization performed in a batch system is, for example, set in the range of 2 hours to 24 hours with a target molecular weight of 3,000 to 100,000.

The pressure during the polymerization, specifically, the pressure of the compressive fluid, is appropriately selected depending on the intended purpose without any limitation. The compressive fluid may be in the state of liquid gas ((2) in the phase diagram of FIG. 2) or high pressure gas ((3) in the phase diagram of FIG. 2), but the pressure of the compressive fluid is preferably the pressure at which the compressive fluid turns into a supercritical state ((1) in the phase diagram of FIG. 2), because the affinity between the compressive fluid and the monomers enhances, and the polymerization reaction can be progressed uniformly and quantitatively therein. Use of the compressive fluid in the state of a supercritical fluid enables to accelerate dissolution or melting of the ring-opening polymerizable monomer, and to progress a polymerization reaction uniformly and quantitatively.

The pressure of the compressive fluid is appropriately selected depending on the intended purpose without any limitation. In the case where the compressive fluid is carbon dioxide, the pressure thereof is preferably 3.7 MPa or higher, more preferably 5 MPa or higher, and even more preferably 7.4 PMa or higher, which is critical pressure, in view of efficiency of a reaction, and polymerization rate.

The temperature of the compressive fluid is appropriately selected depending on the intended purpose without any limitation. In the case where the compressive fluid is carbon dioxide, the temperature thereof is preferably 25°C or higher from the same reason as mentioned above.

The moisture content in the system of the polymerization reaction is appropriately selected depending on the intended purpose without any limitation, but it is preferably 4 mol% or lower, more preferably 1 mol% or lower, and even more preferably 0.5 mol% or lower, relative to 100 mol% of the ring-opening polymerizable monomer. When the moisture content is greater than 4 mol%, it may be difficult to control a molecular weight of a generated polymer as the moisture itself acts as an initiator, though it depends on the molecular weight.

A method for controlling the moisture content of the system of the polymerization reaction is appropriately selected depending on the intended purpose without any limitation, and examples thereof include a method containing performing a pretreatment, such as removing the ring-opening polymerizable monomer, other raw materials, and the moisture contained in the compressive fluid, to thereby control the total moisture content.

In a conventional production method of a polymer using supercritical carbon dioxide, polymerization of a ring-opening polymerizable monomer is carried out using a large amount of supercritical carbon dioxide, as supercritical carbon dioxide has low ability of dissolving a polymer.

In accordance with the polymerization method of the present embodiment, ring-opening polymerization of a ring-opening polymerizable monomer is performed with a high concentration, which has not been realized in a conventional art, in the course of producing a polymer using a compressive fluid. In this case, the pressure applied to the reaction system inside the reaction vessel becomes high in the presence of the compressive fluid, and thus glass transition temperature (Tg) of a polymer product becomes low. As a result, the produced polymer product has low viscosity, and therefore a ring-opening reaction uniformly progresses even in the state where the concentration of the polymer product is high.

To the polymer obtained through polymerization of the ring-opening polymerizable monomer, a urethane bond or ether bond can be introduced. Similarly to the ring-opening polymerizable monomer, the urethane bond or ether bond can be introduced by carrying out a polyaddition reaction in a compressive fluid with addition of an isocyanate compound or glycidyl compound. In this case, a preferable method thereof for controlling a resulting molecular structure is a method in which the aforementioned compound is separately added after completion of a polymerization reaction of the ring-opening polymerizable monomer.

The isocyanate compound used in the polyaddition reaction is appropriately selected depending on the intended purpose without any limitation, and examples thereof include a polyfunctional isocyanate compound, such as isophorone diisocyanate, hexamethylene diisocyanate, lysine diisocyanate, xylene diisocyanate, tolylene diisocyanate, diphenylmethane diisocyanate, and cyclohexane diisocyanate.

The glycidyl compound used in the polyaddition reaction is appropriately selected depending on the intended purpose without any limitation, and examples thereof include a polyfunctional glycidyl compound, such as diethylene glycol diglycidyl ether, polyethylene glycol diglycidyl ether, neopentyl glycol diglycidyl ether, 1,6-hexanediol diglycidyl ether, and glycidyl terephthalate.

<Polymerization Reaction Device>

Subsequently, a polymerization reaction device for use in the present embodiment will be explained with reference to drawings.

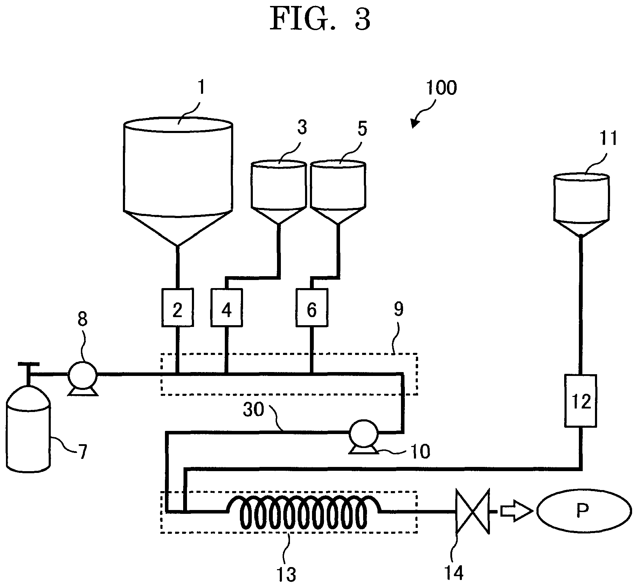

FIG. 3 is a system diagram illustrating one example of the polymerization process in the production method of the present embodiment.

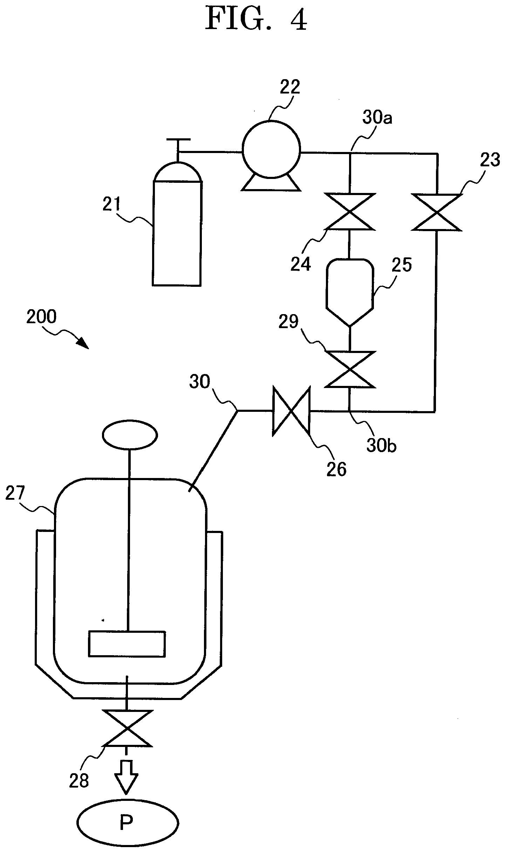

FIG. 4 is a system diagram illustrating one example of the polymerization process of a batch system.

The polymerization reaction in the present embodiment may be performed with a batch system or continuous system, butin order to stably produce a polymer in the batch system, there is a limit in an amount of raw materials to be loaded. Therefore, the continuous system is preferably employed in the present embodiment to increase a ratio of an amount of raw materials relative to the compressive fluid, and to increase a reaction speed.

«Polymerization Reaction Device of Continuous System»

In the system diagram of FIG. 3, a polymerization reaction device 100 contains: a tank 1 for storing lactide (powder) as one example of the ring-opening polymerizable monomer; a metering feeder 2 for measuring and continuously supplying the lactide stored in the tank 1; a tank 3 for storing powderous materials among the initiator components or additives; a metering feeder 4 for measuring and continuously supplying the powderous materials stored in the tank 3; a tank 5 for storing liquid materials among initiator components or additives; a metering pump 6 for measuring and continuously supplying the liquid materials stored in the tank 5; a tank 7 for storing a compressive fluid; a metering pump 8 for measuring and continuously supplying the compressive fluid stored in the tank 7; a melt blending device 9 configured to melt mixing the materials sent from the tanks 1, 3, 5, and 7; a liquid transfer pump 10 for sending the melt blended ring-opening polymerizable monomer etc.; a tank 11 for storing a catalyst; a metering pump 12 for measuring and sending the catalyst stored in the tank 11; a reaction vessel 13 configured to carry out a polymerization reaction using polymerization raw materials and the catalyst; and a pressure adjusting valve 14 for discharging the measured reaction product from the reaction vessel 13.

Note that, in the present embodiment, a device for blending the compressive fluid with raw materials or a polymer to dissolve or melt the raw materials or polymer may be referred to as a "melt blending device." In the present embodiment, moreover, the phrase "continuously supplying" means supplying in the manner that a ring-opening polymerized polymer is continuously attained. Namely, each material can be supplied intermittently, as long as a polymer polymerized by ring-opening polymerization can be continuously attained.

The melt blending device 9 is a device for mixing polymerization raw materials or additives with the compressive fluid and sufficiently dissolving or melting the polymerization raw materials or additives therein.

A shape of a container of the melt blending device 9 is appropriately selected depending on the intended purpose without any limitation, and examples thereof include a tank shape, and a tube shape. Among them, the tube shape is preferable because the raw materials can be supplied from one end, and the mixture can be taken out from the other end.

In the case where the melt blending device 9 does not have a stirrer, a pressure resistant pipe is preferably used as the melt blending device 9. In the case where the melt blending device 9 has a stirrer, the stirrer is appropriately selected depending on the intended purpose without any limitation. The stirrer is preferably a single-screw stirring device, a twin-screw stirring device where screws are each engaged with each other, a two-axial kneader having a plurality of stirring elements engaged each other or overlapped each other, a kneader having spiral stirring elements engaged each other, or a stick mixer, more preferably a two axial or multi-axial stirrer.

Among them, the two-axial or multi-axial stirrer stirring elements of which are engaged with each other is more preferable because there is generated a less amount of the depositions of the reaction product onto the stirrer or container, and it has self-cleaning properties.

A shape of the reaction vessel 13 is appropriately selected depending on the intended purpose without any limitation, and examples thereof include a tank shape, and a tube shape. Among them, the tube shape is preferable because it gives a less dead space.

To the reaction vessel 13, a gas inlet and outlet can be provided for supplying the additives or removing evaporated materials, other than the inlet and outlet for the reaction product.

In the case where the reaction vessel 13 does not have a stirrer, a pressure resistant pipe can be suitably used as the reaction vessel 13. A shape of the reaction vessel is appropriately selected depending on the intended purpose without any limitation, but it is preferably spiral, as a size of the device can be reduced.

In the case where the reaction vessel 13 has a stirrer, the stirrer is configured to stir the ring-opening polymerizable monomer sent from the melt blending device 9, or the generated polymer.

The stirrer of the reaction vessel 13 is appropriately selected depending on the intended purpose without any limitation, but it is preferably a dual- or multi-axial stirrer having screws engaging with each other, stirring elements of 2-flights (rectangle), stirring elements of 3-flights (triangle), or circular or multi-leaf shape (clover shape) stirring wings, in view of self-cleaning. In the case where raw materials including the catalyst are sufficiently mixed in advance, a motionless mixer, which divides the flow and compounds (recombines the flows in multiple stages, can also be used as a stirrer.

The motionless mixer is appropriately selected depending on the intended purpose without any limitation, and examples thereof include: multiflux batch mixers disclosed in Japanese examined patent application publication (JP-B) Nos. 47-15526, 47-15527, 47-15528, and 47-15533; a Kenics-type (static) mixer disclosed in JP-A No. 47-33166; and motionless mixers similar to those listed.

FIG. 3 illustrates an embodiment where one reaction vessel 13 is used, but a device with two or more reaction vessels 13 can be also used. In the case where a plurality of reaction vessels 13 are used, the reaction (polymerization) conditions per reaction vessel 13, i.e., conditions, such as the temperature, concentration of the catalyst, the pressure, the average retention time, and stirring speed, can be the same as in the case only one reaction vessel 13 is used, but they are preferably optimized per reaction vessel 13 corresponding to the progress of the polymerization (the stage of the polymerization). Note that, it is not very good idea that excessively large number of containers are connected to give many stages, as it may extend a reaction time, or a device may become complicated. The number of stages is preferably 1 to 4, more preferably 1 to 3.

In the case where polymerization is performed with only one reaction vessel, a polymerization degree of an obtained polymer or an amount of monomer residues in the polymer are generally unstable, and tend to be varied, and therefore it is not suitable in industrial productions. It is thought that the instability thereof is caused because polymerization raw materials having the melt viscosity of a few poises to several tends poises and the polymerized polymer having the melt viscosity of approximately 1,000 poises are present together in the same container.

In the present embodiment, compared to the above, the viscosity difference within the system can be reduced by dissolving or melting the raw materials and polymers, so that the number of the stages can be reduced compared to that in the conventional polymerization reaction device.

Processes to be performed in the polymerization reaction device 100 will be explained next. In the polymerization reaction device 100, the metering feeder 2 continuously supplies lactide in the tank 1 to the melt blending device 9. The metering feeder 4 or metering pump 6 similarly supplies the initiator components or additives in the tanks 3 and 5 to the melt blending device 9 with the predetermined ratio. Moreover, the metering pump 8 separately supplies the compressive fluid in the tank 7 to the melt blending device 9. As a result, the lactide, initiator, and additives are brought into contact with the compressive fluid, the mixture is stirred in case of the device equipped with a stirrer, to thereby dissolve or melt the raw materials.

A feeding speed of the compressive fluid is appropriately selected depending on the intended purpose without any limitation, but it is preferably a speed at which the compressive fluid, ring-opening polymerizable monomer, and produced polymer product are dissolved or melted. In this case, a ratio (feeding ratio) of the feeding speed of the raw material to the reaction vessel 13 to the feeding speed of the compressive fluid to the reaction vessel 13 is in the range determined by the following formula (i):

$$1 > \frac{\text{Raw materials feeding speed (g/min)}}{\text{Raw materials feeding speed (g/min)} + \text{Compressive fluid feeding speed (g/min)}} \geq 0.5$$

$$\text{Formula (i)}$$

The raw materials in the formula (i) include the ring-opening polymerizable monomer and the initiator.

The feeding ratio is preferably 0.65 to 0.99, more preferably 0.80 to 0.95.

When the feeding ratio is 0.5 or less, it is economically disadvantageous as an amount of the compressive fluid for use increases, and moreover, the polymerization speed reduces as the concentration of the ring-opening polymerizable monomer decreases. Further, in the case where a basic organic catalyst is used, a salt is formed, which may decrease reactivity.

When the feeding ratio is 0.99 or more, melting and plasticizing caused by the compressive fluid may not be sufficient.

By feeding the raw materials (the ring-opening polymerizable monomer, initiator, etc.) and the compressive fluid with the aforementioned feeding ratio, the raw materials are brought into contact with the compressive fluid to melt the raw materials such as the ring-opening polymerizable monomer, and as a result, a molten phase is formed.

The temperature and pressure at which the ring-opening polymerizable monomer is dissolved or melted in the melt blending device 9 is controlled to the temperature and pressure at least equal to or higher than the triplet point of the compressive fluid to thereby prevent the fed compressive fluid from transforming into gas. This is controlled by adjusting output of a heater of the melt blending device 9, or adjusting the feeding amount of the compressive fluid.

In the present embodiment, the temperature at which the ring-opening polymerizable monomer is dissolved or melted may be temperature equal to or lower than the melting point of the ring-opening polymerizable monomer under atmospheric pressure. The internal pressure of the melt blending device 9 becomes high in the presence of the compressive fluid, and thus the melting point of the ring-opening polymerizable monomer becomes low. As a result, the ring-opening polymerizable monomer is dissolved or melted in the melt blending device 9 even in the state where the amount of the compressive fluid is small and the value of the feeding ratio is large.

The additives may be added together with the monomer before the initiation of the polymerization reaction, or may be added during a post treating step performed after the polymerization reaction. Moreover, the additives may be added and kneaded with the obtained polymerization product after taking the polymerization product out. Note that, the weight accuracy of solid (powder or granular) raw materials of polymerization is slightly low. Accordingly, the raw materials of polymerization may be liquidized in advance, if necessary, and the melted materials may be sent by the metering pump. On the other hand, in the case where the raw materials are formed into a low viscous melted state with the compressive fluid, the reactivity is high compared to the case of a conventional production method. Accordingly, in order to carry out a reaction uniformly, the step for mixing raw materials and the step for polymerization after adding the catalyst are separated.

The mixture containing the dissolved or melted ring-opening polymerizable monomer is sent out by a liquid transfer pump 10 to thereby supply to the reaction vessel 13. The reaction vessel 13 contains a stirrer or mixing device, and the reactant inside is heated to a certain temperature while sufficiently stirring the reactant. The metering pump 12 is configured to supply the polymerization catalyst in the predetermined amount to the reaction vessel 13, while measuring the polymerization catalyst in the tank 11. As for the polymerization reaction temperature, pressure, polymerization reaction time, and moisture content in the reaction vessel 13, the aforementioned polymerization conditions are each suitably used.

The polymer P after the predetermined reaction in the reaction vessel 13 is sent out of the system through the pressure adjusting valve 14. In the polymerization reaction device 100 of FIG. 3, the metering pump 14 preferably sends out the reactant from the pressure adjusting valve 14 in the predetermined (constant) amount so that the internal pressure of the system filled with the compressive fluid is kept constant, and stable operation and generation of uniform polymer are achieved.

In order to maintain the back pressure of the pressure adjusting valve 14 constant, a liquid transferring system in the reaction vessel 13 and an amount of the liquid sent by the liquid transfer pump 10 are controlled. Similarly, a liquid transferring system in the melt blending device 9, and metering feeders 2 and 4 and metering pumps 6 and 8 are preferably controlled to maintain the back pressure of the liquid transfer pump 10 constant. The controlling system may be an On-Off controlling system, i.e., an intermittent feeding system. In most cases, however, a continuous or stepwise system in which rotational speed of a pump or the like is gradually increased is preferable. In any case, the control as mentioned above can realize to stably provide a uniform polymer.

«Polymerization Reaction Device of Batch System»

In the system diagram of FIG. 4, the polymerization reaction device 200 contains a tank 21, a metering pump 22, an addition pot 25, a reaction vessel 27, and valves (23, 24, 26, 28, 29). Each of the devices above is connected with a pressure resistant pipe 30 as illustrated in FIG. 4. Moreover, couplings (30a, 30b) are provided to the pipe 30.

The tank 21 stores the compressive fluid. Note that, the tank 21 may contain gas or solid that is transformed into a compressive fluid upon application of heat or pressure in a supply path through which it is supplied to the reaction vessel 27, or in the reaction vessel 27. In this case, the gas or solid stored in the tank 21 is transformed into the state of (1), (2), or (3) in the phase diagram of FIG. 2 in the reaction vessel 27 by applying heat or pressure.

The metering pump 22 supplies the compressive fluid stored in the tank 21 to the reaction vessel 27 at constant pressure and flow rate. The addition pot 25 stores the catalyst to be added to the raw materials in the reaction vessel 27. By opening and closing each of the valves (23, 24, 26, 29), the path is switched between a path for supplying the compressive fluid stored in the tank 7 to the reaction vessel 27 via the addition pot 25, and a path for supplying the compressive fluid to the reaction vessel 27 without passing through the addition pot 25.

The reaction vessel 27 is a vessel configured to bring ring-opening polymerizable monomer and initiator, which have been loaded in the reaction vessel 27, into contact with the compressive fluid supplied from the tank 21, to thereby dissolve or melt the ring-opening polymerizable monomer, followed by allowing the catalyst supplied from the addition pot 25 to be in contact, to thereby carry out ring-opening polymerization of the ring-opening polymerizable monomer.

The reaction vessel 27 may be provided with a gas outlet for releasing evaporated materials.

Moreover, the reaction vessel 27 contains a heater for heating the transported raw materials.

Further, the reaction vessel 27 contains a stirrer for stirring the raw materials, and compressive fluid.

Stirring by the stirrer prevents sedimentation of the generated polymer, when there is a difference in concentration between the raw materials and the polymer product. As a result, a polymerization reaction can be progressed even more uniformly and quantitatively.

The valve 28 discharges the compressive fluid and product (polymer) in the reaction vessel 27 by opening after the completion of the polymerization reaction.

Next, a polymerization method of a ring-opening polymerizable monomer using the polymerization reaction device 200 will be explained. First, the metering pump 22 is operated and the valves (23, 26) are open so that the compressive fluid stored in the tank 21 is supplied to the reaction vessel 27 without passing through the addition pot 25. As a result, the ring-opening polymerizable monomer and initiator, which have been previously loaded in the reaction vessel 27, are brought into contact with the compressive fluid in the reaction vessel 27, and stirred, to thereby dissolve or melt the ring-opening polymerizable monomer.

In this case, the ratio (mass ratio) of the raw materials to the compressive fluid in the reaction vessel 13 is the same as in the case of the continuous system, and is preferably in the range determined by the following formula (ii):

$$1 > \frac{\text{Mass of raw materials}}{\text{Mass of raw materials} + \text{Mass of compressive fluid}} \geq 0.5$$

$$\text{Formula (ii)}$$

Subsequently, the valves (24, 29) are open to supply the metal catalyst stored in the addition pot 25 to the reaction vessel 27. The catalyst supplied to the reaction vessel 27 is optionally sufficiently stirred by a stirrer of the reaction vessel 27, and heated to the predetermined temperature by a heater. As a result, the ring-opening polymerizable monomer is polymerized through a ring-opening polymerization reaction in the presence of the catalyst in the reaction vessel 27, to thereby generate a polymer.

As for the reaction temperature, pressure, polymerization reaction time, and moisture content in the reaction vessel 27, the aforementioned polymerization reaction conditions can be used.

The polymer P, which has been completed the ring-opening polymerization reaction in the reaction vessel 27, is discharged from the valve 28, and then sent out from the reaction vessel 27.

(Physical Properties of Polymer)

The polymerization rate of the ring-opening polymerizable monomer (rate of the ring-opening polymerizable monomer converted into a polymer) is appropriately selected depending on the intended purpose without any limitation, but in the method for producing a polymer of the present invention, it is preferably 96 mol% or higher, more preferably 98 mol% or higher. When the polymerization rate is lower than 96 mol%, the generated product may not have satisfactory thermal properties as a polymer, and an operation for removing the ring-opening polymerizable monomer may be further required. Note that, the polymerization rate in the present invention represents a rate that an amount of unreacted monomers is deducted from an amount of the ring-opening polymerizable monomer used, and represents a ratio of the ring-opening polymerizable monomer contributing to generation of a polymer.

The number average molecular weight of the polymer obtained by the present invention can be adjusted with the amount of the initiator. The number average molecular weight of the polymer is appropriately selected depending on the intended use without any limitation, but it is preferably 5,000 or greater, more preferably 12,000 or greater. When the number average molecular weight thereof is smaller than 5,000, the resulting polymer has insufficient strength to serve as a polymer.

A value of the weight average molecular weight of the polymer obtained by the method of the present invention divided by the number average molecular weight thereof is appropriately selected depending on the intended purpose without any limitation, but it is preferably 1.0 to 2.5, more preferably 1.0 to 2.0. When the value thereof is larger than 2.0, it is highly possible that a polymerization reaction proceeds unevenly, and thus it is difficult to control physical properties of the polymer.

«Use of Polymer»

The polymer obtained by the present invention is excellent in safety and stability because it is produced by the method which does not use a metal catalyst and an organic solvent, and there are hardly any monomer residues therein. Accordingly, the polymer obtained by the present invention is widely applied for various uses, such as an electrophotographic developer, a printing ink, paints for building, cosmetic products, and medical materials.

For the purpose of improving molding ability, secondary processability, degradability, tensile strength, thermal resistance, storage stability, crystallinity, and weather resistance, various additives may be added to form a polymer composition, and the polymer may be used as the polymer composition. Examples of the aforementioned additives include a stabilizer (e.g., epoxidized soybean oil, and carbodiimide), an antioxidant (e.g., 2,6-di-t-butyl-4-methyl phenol, and butylhydroxyanisol), an anticlouding agent (e.g., glycerin fatty acid ester, and monostearyl citrate), an UV-ray absorber, a thermal stabilizer, a flame retardant, an internal mold release agent, inorganic additives having an effect of a crystal nucleus agent (e.g., clay, talc, and silica), an antistatic agent, a surface wet improving agent, a combustion adjuvant, a pigment (e.g., titanium oxide, carbon black, and ultramarine blue), a lubricant, and a natural product.

An amount of the additives to be blended is appropriately selected depending on intentions for adding the additives, or types of the additives to be added, without any limitation, but it is preferably 0 to 5 parts by mass, relative to 100 parts by mass of the polymer composition.

«Effects of Embodiments of Present Invention»

Conventional melt polymerization methods of ring-opening polymerizable monomers leave residues of unreacted monomer in a polymer as a reaction is generally performed at high temperature of 150°C or higher. Accordingly, in these methods, a step for removing unreacted monomers was needed. In the case where solution polymerization is performed using a solvent, it was necessary to provide a step for removing the solvent in order to use the obtained polymer in the state of a solid. Accordingly, in any of the conventional methods, it could not avoid an increase in a number of steps, or increase in cost due to low yield.

The method for producing a polymer of the present invention contains bringing a compressive fluid and a ring-opening polymerizable monomer into contact with each other, followed by adding a catalyst thereto, to thereby allow the ring-opening polymerizable monomer to carry out ring-opening polymerization. Accordingly, the present invention can provide a polymer, which has excellent properties, such as low cost, less environmental load, energy saving, and resources saving, and excels in mold formability, and thermal stability, because of the following reasons:

(1) A reaction proceeds at low temperature as the ring-opening polymerizable monomer is melted at low temperature by bringing into contact with the compressive fluid.

(2) As the reaction proceeds at low temperature, a side reaction hardly occurs, and thus a polymer can be obtained at high yield relative to an amount of the ring-opening polymerizable monomer added (namely, an amount of unreacted ring-opening polymerizable monomer is small). Accordingly, a purification step (step for removing unreacted ring-opening polymerizable monomer or the like) performed for attaining a polymer having excellent mold formability and thermal stability can be simplified, or omitted.

(3) As an organic compound free from metal can be selected as a catalyst, in the case of production of a polymer for use in which inclusion of a certain metal is not desired, it is not necessary to provide a step for removing the metal catalyst.

(4) Since a dry polymer can be obtained with one step, a drying step can be simplified or omitted.

(5) As the compressive fluid is used, a ring-opening polymerization reaction can be performed without an organic solvent. Note that, the organic solvent means a liquid organic compound used for dissolving the ring-opening polymerizable monomer.

(6) A reaction proceeds uniformly, because the ring-opening polymerizable monomer is subjected to ring-opening polymerization with a catalyst after being melted, depending on the compressive fluid for use. Accordingly, the production method of the present invention is suitably used when optical isomers or copolymers with other monomers are produced.

## Examples

The present invention will be more specifically explained through examples and comparative examples thereof hereinafter, but these examples shall not be construed as to limit a scope of the present invention in any way.

Molecular weights of polymers obtained in Examples and Comparative Examples, and residual amounts of monomers therein were measured in the following manners.

<Measurement of Molecular Weight of Polymer>

The molecular weight was measured through gel permeation chromatography (GPC) under the following conditions.

Apparatus: GPC-8020 (product of TOSOH CORPORATION)
Column: TSK G2000HXL and G4000HXL (product of TOSOH CORPORATION)
Temperature: 40°C
Solvent: Tetrahydrofuran (THF)
Flow rate: 1.0 mL/min

First, a calibration curve of molecular weight was obtained using monodispersed polystyrene serving as a standard sample. A polymer sample (1 mL) having a polymer concentration of 0.5% by mass was applied and measured under the above conditions, to thereby obtain the molecular weight distribution of the polymer. The number average molecular weight Mn and the weight average molecular weight Mw of the polymer were calculated from the calibration curve. The molecular weight distribution is a value calculated by dividing Mw with Mn.

<Polymerization Rate of Monomer (mol%)>

In the case of polylactic acid, the amount of unreacted monomer (mol%) was calculated in deuterated chloroform with a nuclear magnetic resonance apparatus (JNM-AL300, of JEOL Ltd.) as a value obtained as follows: 100 x the ratio of a quartet peak area attributed to lactide (4.98 ppm to 5.05 ppm) to a quartet peak area attributed to polylactic acid (5.10 ppm to 5.20 ppm). The polymerization rate of the monomer is a value obtained by deducting an amount of the unreacted monomer from 100.

In the case of polycaprolactone, the amount of unreacted monomer (mol%) was calculated in deuterated chloroform with a nuclear magnetic resonance apparatus (JNM-AL300, of JEOL Ltd.) as a value obtained as follows: 100 x the ratio of a triplet peak area attributed to caprolactone (4.22 ppm to 4.25 ppm) to a triplet peak area attributed to polycaprolactone (4.04 ppm to 4.08 ppm). The polymerization rate of the monomer is a value obtained by deducting an amount of the unreacted monomer from 100.

In the case of polycarbonate, the amount of unreacted monomer (mol%) was calculated in deuterated chloroform with a nuclear magnetic resonance apparatus (JNM-AL300, of JEOL Ltd.) as a value obtained as follows: 100 x the ratio of a singlet peak area attributed to ethylene carbonate (4.54 ppm) to a quartet peak area attributed to polycarbonate (4.22 ppm to 4.25 ppm). The polymerization rate of the monomer is a value obtained by deducting an amount of the unreacted monomer from 100.

<Amount of Catalyst Residues>

Based on the results of the GPC measurement and NMR measurement above, an amount of catalyst residues was calculated by the following equation.

$$\text{Amount of catalyst residues} = [\text{peak area of the molecular weight of 1,000 or smaller determined from the GPC result (\% by weight)}] - [\text{amount of unreacted monomers determined from the NMR result (\% by weight)}]$$

<Reaction Vessel>

As a reaction vessel, a 100 mL batch type pressure vessel illustrated in FIG. 4 was used.

(Example 1-1)

A 100 mL pressure vessel 27 was charged with 90 parts by mass of lactide of L-lactic acid, 10 parts by mass of lactide of D-lactic acid, and lauryl alcohol serving as an initiator in an amount of 1.00 mol%, relative to 100 mol% of the monomers, which had been measured so that the mass of the entire system became 50 g. The resulting mixture was heated to and melted at 110°C, followed by charging the pressure vessel 27 with supercritical carbon dioxide (60°C, 15MPa) by means of a pump 22. Then, the mixture was melted with stirring for 10 minutes. Here, the temperature of the internal system was controlled to 60°C. Note that, the ratio of raw materials including the monomer and initiator etc., to carbon dioxide serving a compressive fluid was 1.26, as the specific gravity of the raw materials in the system was 1.25 and the specific gravity of the compressive fluid was 0.65 at 60°C and 15 MPa.

Next, the path of the compressive fluid was switched to the path passing through the addition pot 25. As a result of this path change, an organic catalyst (1,8-diazabicyclo[5.4.0]undec-7-ene (DBU), 2.0 mol%), which had been stored in the adding pot 25 in advance, was pushed out and added from the addition pot 25 into the pressure vessel 27 by the pressure, which was set higher than the internal pressure of the pressure vessel 27 by 1 MPa. Thereafter, the resulting mixture was allowed to react for 2 hours. After the completion of the reaction, the compressive fluid and the polymer were discharged from the discharge valve 28 by reducing the pressure, to thereby yield a polymer (polylactic acid). The physical properties (Mn, Mw/Mn, polymerization rate, amount of catalyst residue) of the obtained polymer were measured in the manners as described above. The results are presented in Table 1.

(Examples 1-2 to 1-4)

In Examples 1-2 to 1-4, polymers were produced in the same manner as in Example 1-1, provided that an amount of the initiator was changed as depicted in Table 1. Physical properties of the obtained polymers were measured in the manners as described above. The results are presented in Table 1.

(Examples 1-5 to 1-7)

In Examples 1-5 to 1-7, polymers were produced in the same manner as in Example 1-1, provided that the reaction temperature was changed as depicted in Table 2. Physical properties of the obtained polymers were measured in the manners as described above. The results are presented in Table 2.

(Examples 1-8 to 1-10)

In Examples 1-8 to 1-10, polymers were produced in the same manner as in Example 1-1, provided the reaction pressure was changed as depicted in Table 2. Physical properties of the obtained polymers were measured in the manners as described above. The results are presented in Table 2.

(Examples 1-11 to 1-13)

In Examples 1-11 to 1-13, polymers were produced in the same manner as in Example 1-1, provided that the reaction time and reaction pressure were changed as depicted in Table 2. Physical properties of the obtained polymers were measured in the manners as described above. The results are presented in Table 2.

(Examples 1-14 to 1-16)

In Examples 1-14 to 1-16, polymers were produced in the same manner as in Example 1-1, provided that the amount of the caralyst was changed as depicted in Table 3. Physical properties of the obtained polymers were measured in the manners as described above. The results are presented in Table 3.

(Examples 1-17 to 1-19)

In Examples 1-17 to 1-19, polymers were produced in the same manner as in Example 1-1, provided that as the initiator, polycarbonate (DURANOL G3450J, manufactured by Asahi Kasei Chemicals Corporation), polycaprolactone (PLACCEL 220, Daicel Corporation), or polytetramethylene glycol (TERATHANE 2000, Du Pont K.K.) was used in the amount as depicted in Table 4. Physical properties of the obtained polymers were measured in the manners as described above. The results are presented in Table 4.

(Examples 1-20 to 1-22)

In Examples 1-20 to 1-22, polymers were produced in the same manner as in Example 1-1, provided that the catalyst for use, reaction pressure, and reaction time were changed as depicted in Table 5. Physical properties of the obtained polymers were measured in the manners as described above. The results are presented in Table 5.

(Examples 1-23 to 1-27, 1-32 to 1-34)

In Examples 1-23 to 1-27 and 1-32 to 1-34, polymers were produced in the same manner as in Example 1-1, provided that the ring-opening monomer for use, catalyst for use, reaction pressure, reaction temperature, and reaction time were changed as depicted in Table 5. Physical properties of the obtained polymers were measured in the manners as described above. The results are presented in Table 5.

(Example 1-28)

A ring-opening polymerization of a mixture of L-lactide and D-lactide (90/10) was carried out by means of a polymerization reaction device 100 illustrated in FIG. 3. The configuration of the polymerization reaction device 100 was as follows:

Tank 1, Metering Feeder 2:

Plunger pump NP-S462, manufactured by Nihon Seimitsu Kagaku Co., Ltd.
The tank 1 was charged with liquidized lactide as a ring-opening polymerizable monomer (a mixture of L-lactide and D-lactide (mass ratio: 90/10)).

Tank 3, Metering Feeder 4:

Intelligent HPLC pump (PU-2080), manufactured by JASCO Corporation
The tank 3 was charged with lauryl alcohol as an initiator.

Tank 5, Metering Pump 6: Not used in Example 1-28
Tank 7: Carbonic acid gas cylinder

Tank 11, Metering Pump 12:

> Intelligent HPLC pump (PU-2080), manufactured by JASCO Corporation
> The tank 11 was charged with DBU (organic catalyst).

Melt Blending Device 9: A 1/8-inch pressure resistant pipe without a stirrer
Reaction Vessel 13: A 1/8-inch pressure resistant pipe without a stirrer

The metering feeder 2 supplied the liquidized lactide in the tank 1 to a vessel of the melt blending device 9 at flow rate of 4 g/min. The metering feeder 4 supplied lauryl alcohol in the tank 3 to the vessel of the melt blending device 9 at constant rate so that the lauryl alcohol was 0.5 mol in an amount, relative to 99.5 mol of lactide. The metering pump 8 continuously supplied carbonic acid gas in the tank 7 into the vessel of the melt blending device 9 so that the carbonic acid gas was 5 parts by mass in an amount, relative to 100 parts by mass of the raw materials supplied per unit time.

Note that, the raw materials included lactide serving as the ring-opening polymerizable monomer, and lauryl alcohol serving as the initiator.

The feeding rate of the raw materials was 4.26 g/min. Further, the opening of the pressure adjusting valve 14 was adjusted so that the pressure of the polymerization system became 15 MPa. Moreover, the set temperature adjacent to the inlet for raw materials of the melt blending device 9 was 100°C, and the set temperature adjacent to the outlet for melted and blended materials was 60°C. Under the conditions as described, by means of the melt blending device 9, the raw materials including lactide and lauryl alcohol, and the compressive fluid, each respectively supplied from tanks (1, 3, 7), were continuously brought into contact with each other, blended, and melted.

Each material melted in the melt blending device 9 was sent to the reaction vessel 13 by the liquid transfer pump 10. The polymerization catalyst (DBU) stored in the tank 11 was introduced into the reaction vessel 13 by the metering pump 12, so that the catalyst was 0.1 mol in an amount relative to 99.9 mol of lactide, to thereby carry out a ring-opening polymerization of lactide in the presence of DBU. The set temperature adjacent to the inlet of the reaction vessel 13 was 60°C, the set temperature adjacent to the top edge of the reaction vessel 13 was 60°C, and the average retention time of each material in the reaction vessel 13 was about 1,200 seconds. The polymer product (polylactic acid) obtained by passing through the pressure adjusting valve 14 was subjected to the measurements of physical properties (Mn, Mw/Mn, polymerization rate of monomer) thereof in the manners as described above. The results are presented in Table 6.

(Examples 1-29 to 1-31, 1-35 to 1-37)

In Examples 1-29 to 1-31, 1-35 to 1-37, polymers were produced in the same manner as in Example 1-28, provided that the initiator for use, and feeding ratio were changed as depicted in Table 6. Physical properties of the obtained polymers were measured in the manners as described above. The results are presented in Table 6.

(Comparative Examples 1-1 to 1-3)

In Comparative Examples 1-1 to 1-3, polymers were produced in the same manner as in Example 1-1, provided that the reaction pressure, reaction temperature and reaction time were changed as depicted in Table 7. Note that, in Comparative Examples 1-1 to 1-3, carbon dioxide did not form a compressive fluid. Physical properties of the obtained polymers were measured in the manners as described above. The results are presented in Table 7.

(Comparative Example 1-4)

A 100 mL pressure vessel was charged with 90 parts by mass of lactide of L-lactic acid, 10 parts by mass of lactide of D-lactic acid, lauryl alcohol serving as an initiator in an amount of 1.00 mol% relative to 100 mol% of the monomers, and 1,8-diazabicyclo[5.4.0]undec-7-ene serving as an organic catalyst in an amount of 2.0 mol% relative to 100 mol% of the monomers so that the mass of the entire system became 50 g. A difference to Example 1 was timing for adding the organic catalyst. Thereafter, the pressure vessel was charged with supercritical carbon dioxide (60°C, 15MPa), and heated to the internal system temperature of 60°C, followed by allowing the mixture to react for 1 hour. After the completion of the reaction, the compressive fluid and the polymer were discharged from the discharge valve 28 by reducing the pressure, to thereby yield a polymer (polylactic acid). The physical properties (Mn, Mw/Mn, polymerization rate, amount of catalyst residue) of the obtained polymer were measured in the manners as described above. The results are presented in Table 6.

(Comparative Examples 1-5 to 1-6)

In Comparative Examples 1-5 to 1-6, polymers were produced in the same manner as in Comparative Example 1-4, provided that the reaction time was changed as depicted in Table 6. Physical properties of the obtained polymers were measured in the manners as described above. The results are presented in Table 6.

(Comparative Example 1-7)

In Comparative Example 1-7, a polymer was produced in the same manner as in Example 1-1, provided that the catalyst was not used, and the reaction temperature was changed as depicted in Table 6. Physical properties of the obtained polymers were measured in the manners as described above. The results are presented in Table 6.

(Examples 2-1 to 2-4)

In Examples 2-1 to 2-4, polymers were produced by subjecting the polymers obtained in Examples 1-1 to 1-4 to vacuum drying at 120°C for 4 hours. Physical properties of the obtained polymers were measured in the manners as described above. The results are presented in Table 1.

Table 1

|  | Ex. 1-1 | Ex. 1-2 | Ex. 1-3 | Ex. 1-4 | Ex. 2-1 | Ex. 2-2 | Ex. 2-3 | Ex. 2-4 |
|---|---|---|---|---|---|---|---|---|
| Catalyst | DBU | DBU | DBU | DBU | DBU | DBU | DBU | DBU |
| Monomer | Lactide | Lactide | Lactide | Lactide | Lactide | Lactide | Lactide | Lactide |
| Initiator | Lauryl alcohol | Lauryl alcohol | Lauryl alcohol | Lauryl alcohol | Laurel alcohol | Lauryl alcohol | Lauryl alcohol | Lauryl alcohol |
| Amount of initiator (mol%) | 1.00 | 3.00 | 0.50 | 0.25 | 1.00 | 3.00 | 0.50 | 0.25 |
| Pressure (MPa) | 15 | 15 | 15 | 15 | 15 | 15 | 15 | 15 |
| Temperature (°C) | 60 | 60 | 60 | 60 | 60 | 60 | 60 | 60 |
| Reaction time (hr) | 2 | 2 | 2 | 2 | 2 | 2 | 2 | 2 |
| Mn | 12,000 | 5,300 | 24,000 | 58,000 | 12,000 | 5,300 | 24,000 | 58,000 |
| Mw/Mn | 1.3 | 1.4 | 1.5 | 1.4 | 1.3 | 1.4 | 1.5 | 1.4 |
| Polymerization rate (mol%) | 100 | 100 | 99 | 99 | 100 | 100 | 100 | 99 |
| Amount of residual catalyst | 1.2 | 1.5 | 1.3 | 1.4 | 0.0 | 0.0 | 0.1 | 0.2 |

Table 2

| | Ex. 1-5 | Ex. 1-6 | Ex. 1-7 | Ex. 1-8 | Ex. 1-9 | Ex. 1-10 | Ex. 1-11 | Ex. 1-12 | Ex. 1-13 |
|---|---|---|---|---|---|---|---|---|---|
| Catalyst | DBU | DBU | DBU | DBU | DBU | DBU | DBU | DBU | DBU |
| Monomer | Lactide | Lactide | Lactide | Lactide | Lactide | Lactide | Lactide | Lactide | Lactide |
| Initiator | Lauryl alcohol | Lauryl alcohol | Lauryl alcohol | Lauryl alcohol | Lauryl alcohol | Lauryl alcohol | Lauryl alcohol | Lauryl alcohol | Lauryl alcohol |
| Amount of initiator (mol%) | 1.00 | 1.00 | 1.00 | 1.00 | 1.00 | 1.00 | 1.00 | 1.00 | 1.00 |
| Pressure (MPa) | 15 | 15 | 15 | 5 | 10 | 30 | 5 | 10 | 30 |
| Temperature (°C) | 25 | 80 | 100 | 60 | 60 | 60 | 60 | 60 | 60 |
| Reaction time (hr) | 2 | 2 | 2 | 2 | 2 | 2 | 0.1 | 0.5 | 1 |
| Mn | 11,000 | 10,000 | 12,000 | 9,800 | 11,000 | 12,000 | 11,000 | 12,000 | 11,000 |
| Mw/Mn | 1.6 | 1.5 | 1.6 | 1.5 | 1.6 | 1.4 | 1.5 | 1.6 | 1.4 |
| Polymerization rate (mol%) | 99 | 99 | 99 | 98 | 98 | 98 | 98 | 99 | 99 |
| Amount of residual catalyst | 1.4 | 1.3 | 1.1 | 1.3 | 1.4 | 1.5 | 1.4 | 1.2 | 1.3 |

Table 3

|  | Ex. 1-14 | Ex. 1-15 | Ex. 1-16 |
|---|---|---|---|
| Catalyst | DBU | DBU | DBU |
| Amount of catalyst (mol%) | 0.2 | 1.0 | 1.5 |
| Monomer | Lactide | Lactide | Lactide |
| Initiator | Lauryl alcohol | Lauryl alcohol | Lauryl alcohol |
| Amount of initiator (mol%) | 1.00 | 1.00 | 1.00 |
| Pressure (MPa) | 15 | 15 | 15 |
| Temperature (°C) | 60 | 60 | 60 |
| Reaction time (hr) | 2 | 2 | 2 |
| Mn | 11,000 | 12,000 | 10,000 |
| Mw/Mn | 1.6 | 1.4 | 1.2 |
| Polymerization rate (mol%) | 99 | 100 | 99 |
| Amount of residual catalyst | 1.4 | 1.5 | 1.6 |

Table 4

|  | Ex. 1-17 | Ex. 1-18 | Ex. 1-19 |
|---|---|---|---|
| Catalyst | DBU | DBU | DBU |
| Monomer | Lactide | Lactide | Lactide |
| Initiator | Polycarbonate | Polycaprolactone | Polytetramethylene glycol |
| Amount of initiator (mol%) | 20 | 20 | 20 |
| Pressure (MPa) | 10 | 10 | 10 |
| Temperature (°C) | 60 | 60 | 60 |
| Reaction time (hr) | 2 | 2 | 2 |
| Mn | 11,000 | 12,000 | 10,000 |
| Mw/Mn | 1.4 | 1.4 | 1.6 |
| Polymerization rate (mol%) | 99 | 100 | 99 |
| Amount of residual catalyst | 1.7 | 1.4 | 1.5 |

Table 5-1

|  | Ex. 1-20 | Ex. 1-21 | Ex. 1-22 | Ex. 1-23 | Ex. 1-24 | Ex. 1-25 |
|---|---|---|---|---|---|---|
| Catalyst | DABCO | DMAP | ITBU | DPG | TDB | DBU |
| Monomer | Lactide | Lactide | Lactide | ε-caprolactone | ε-caprolactone | Ethylene carbonate |
| Initiator | Lauryl alcohol | Lauryl alcohol | Lauryl alcohol | Lauryl alcohol | Lauryl alcohol | Lauryl alcohol |
| Amount of initiator (mol%) | 1.00 | 1.00 | 1.00 | 1.00 | 1.00 | 1.00 |
| Pressure (MPa) | 10 | 10 | 10 | 10 | 10 | 10 |

(continued)

|  | Ex. 1-20 | Ex. 1-21 | Ex. 1-22 | Ex. 1-23 | Ex. 1-24 | Ex. 1-25 |
|---|---|---|---|---|---|---|
| Temperature (°C) | 60 | 60 | 60 | 60 | 60 | 60 |
| Reaction time (hr) | 10 | 10 | 10 | 10 | 10 | 10 |
| Mn | 6,400 | 5,400 | 7,400 | 4,200 | 5,800 | 4,800 |
| Mw/Mn | 1.4 | 1.6 | 1.6 | 1.7 | 1.4 | 1.3 |
| Polymerization rate (mol%) | 99 | 100 | 100 | 99 | 98 | 98 |
| Amount of residual catalyst | 1.4 | 1.4 | 1.5 | 1.5 | 1.6 | 1.3 |

Table 5-2

|  | Ex. 1-26 | Ex. 1-27 | Ex. 1-32 | Ex. 1-33 | Ex. 1-34 |
|---|---|---|---|---|---|
| Catalyst | Tin octylate | Tin octylate | Tin octylate | Tin octylate | Tin octylate |
| Monomer | Lactide | ε-caprolactone | Lactide | Lactide | Lactide |
| Initiator | Lauryl alcohol | Lauryl alcohol | Lauryl alcohol | Lauryl alcohol | Lauryl alcohol |
| Amount of initiator (mol%) | 1.00 | 1.00 | 0.1 | 0.1 | 0.05 |
| Pressure (MPa) | 10 | 10 | 10 | 10 | 10 |
| Temperature (°C) | 140 | 140 | 140 | 140 | 140 |
| Reaction time (hr) | 1 | 10 | 1 | 0.5 | 1 |
| Mn | 6,500 | 4,400 | 98,000 | 95,000 | 180,000 |
| Mw/Mn | 1.9 | 2.0 | 1.9 | 1.9 | 1.9 |
| Polymerization rate (mol%) | 99 | 99 | 99 | 99 | 98 |
| Amount of residual catalyst | 1.4 | 1.5 | 1.4 | 1.4 | 1.4 |

Table 6

|  | Ex. 1-28 | Ex. 1-29 | Ex. 1-30 | Ex. 1-31 | Ex. 1-35 | Ex. 1-36 | Ex. 1-37 |
|---|---|---|---|---|---|---|---|
| Catalyst | DBU | DBU | DBU | DBU | Tin octylate | Tin octylate | Tin octylate |
| Monomer | Lactide | Lactide | Lactide | Lactide | Lactide | Lactide | Lactide |
| Initiator | Lauryl alcohol | Lauryl alcohol | Lauryl alcohol | Lauryl alcohol | Lauryl alcohol | Lauryl alcohol | Lauryl alcohol |
| Amount of initiator (mol%) | 0.50 | 0.50 | 0.50 | 0.50 | 0.50 | 0.50 | 0.50 |
| Pressure (MPa) | 15 | 15 | 15 | 15 | 10 | 10 | 10 |
| Temperature (°C) | 60 | 60 | 60 | 60 | 140 | 140 | 140 |
| Feeding ratio | 0.95 | 0.91 | 0.83 | 0.75 | 0.95 | 0.83 | 0.75 |
| Polymer feeding speed (g/min) | 4 | 4 | 4 | 4 | 18,000 | 18,000 | 19,000 |
| Average retention time (second) | 1,200 | 1,200 | 1,200 | 1,200 | 1.9 | 1.9 | 1.9 |

(continued)

|  | Ex. 1-28 | Ex. 1-29 | Ex. 1-30 | Ex. 1-31 | Ex. 1-35 | Ex. 1-36 | Ex. 1-37 |
|---|---|---|---|---|---|---|---|
| Mn | 18,000 | 17,000 | 19,000 | 18,000 | 98 | 98 | 98 |
| Mw/Mn | 1.8 | 1.5 | 1.7 | 1.9 | 1.9 | 1.8 | 2.0 |
| Polymerization rate (mol%) | 99 | 100 | 100 | 99 | 99 | 99 | 100 |

Table 7

|  | Comp. Ex. 1-1 | Comp. Ex. 1-2 | Comp. Ex. 1-3 | Comp. Ex. 1-4 | Comp. Ex. 1-5 | Comp. Ex. 1-6 | Comp. Ex. 1-7 |
|---|---|---|---|---|---|---|---|
| Catalyst | DBU | DBU | DBU | DBU | DBU | DBU | None |
| Monomer | Lactide | Lactide | Lactide | Lactide | Lactide | Lactide | Lactide |
| Initiator | Lauryl alcohol | Lauryl alcohol | Lauryl alcohol | Lauryl alcohol | Lauryl alcohol | Lauryl alcohol | Lauryl alcohol |
| Amount of initiator (mol%) | 1.00 | 1.00 | 1.00 | 1.00 | 1.00 | 1.00 | 1.00 |
| Pressure (MPa) | 3 | 3 | 3 | 15 | 15 | 15 | 10 |
| Temperature (°C) | 25 | 50 | 80 | 60 | 60 | 60 | 80 |
| Reaction time (hr) | 10 | 10 | 10 | 1 | 2 | 4 | 10 |
| Mn | 2,800 | 6,800 | 17,000 | 9,200 | 8,800 | 11,000 | 2,300 |
| Mw/Mn | 1.8 | 1.7 | 1.6 | 1.8 | 1.7 | 1.8 | 1.7 |
| Polymerization rate (mol%) | 32 | 38 | 50 | 96 | 95 | 97 | 23 |
| Amount of residual catalyst | 1.4 | 1.6 | 1.4 | 1.6 | 1.6 | 1.7 | 1.2 |

(Example 3-1)

A ring-opening polymerization of a mixture of L-lactide and D-lactide (90/10) was carried out by means of a polymerization reaction device 200 illustrated in FIG. 4. The configuration of the polymerization reaction device 200 was as follows:

Cylinder 21: carbonic acid gas cylinder
Addition pot 25: A 1/4-inch SUS 316 pipe was disposed between the valves 24 and 29 and used as an addition pot. In the pipe, 0.5 g of 1,8-diazabicyclo[5.4.0]undec-7-ene (DBU) was charged in advance.
Reaction vessel 27: A 100-mL SUS 316 reactoin resistant vessel

The reaction vessel was charged in advance with 108 g of a mixture (molar ratio: 100/3) of lactide (a mixture of L-lactide and D-lactide (mass ratio: 90/10)), which had been liquidized in advance, serving as a ring-opening polymerizable monomer, and lauryl alcohol serving as an initiator.
The pump 22 was operated and valves (23, 26) were open so that carbon dioxide stored in the cylinder 21 was supplied to the reaction vessel 27 without passing through the addition pot 25. After replacing the internal atmosphere of the reaction vessel 27 with carbon dioxide, the reaction vessel 27 was filled with carbon dioxide until the internal pressure thereof became 15 MPa. After cooling the inside the vessel of the reaction vessel 27 to 60°C, the valves (24, 29) were open to supply 1,8-diazabicyclo[5.4.0]undec-7-ene (DBU) in the addition pot 25 to the reaction vessel 27. Thereafter, a polymerization reaction of lactide was carried out for 12 hours in the reaction vessel 27. After completion of the reaction, the valve 28 was open to gradually release the temperature and pressure inside the reaction vessel 27 back to ambient temperature and pressure, respectively, and three hours later, a polymer (polylactic acid) in the reaction vessel 27 was taken out. Physical properties (Mn, Mw/Mn, polymerization rate of monomer) of the obtained polymer was measured in the manner as described above. The results are presented in Table 8. Moreover, the mixing ratio depicted in Table 8 was calculated by the following formulae: Spatial volume of supercritical carbon dioxide:

$$100 \text{ mL} - 108 \text{ g}/1.27 \text{ (specific gravity of raw materials)} = 15 \text{ mL}$$

Mass of supercritical carbon dioxide:

$$15 \text{ mL} \cdot 0.303 \text{ (specific gravity of carbon dioxide at } 110^{\circ}\text{C}, 15 \text{ MPa)}$$

$$= 4.5$$

Mixing ratio:

$$108 \text{ g}/(108 \text{ g} + 4.5 \text{ g}) = 0.96$$

(Examples 3-2 to 3-4)

In Examples 3-2 to 3-4, polymers were produced in the same manner as in Example 3-1, provided that an amount of the initiator was changed as depicted in Table 8. Physical properties of the obtained polymers were measured in the manners as described above. The results are presented in Table 8.

(Examples 3-5 to 3-7)

In Examples 3-5 to 3-7, polymers were produced in the same manner as in Example 3-1, provided that the mixing ratio and reaction temperature were changed as depicted in Table 8. Physical properties of the obtained polymers were measured in the manners as described above. The results are presented in Table 8.

(Examples 3-8 to 3-10)

In Examples 3-8 to 3-10, polymers were produced in the same manner as in Example 3-1, provided that the mixing ratio and reaction pressure were changed as depicted in Table 9. Physical properties of the obtained polymers were measured in the manners as described above. The results are presented in Table 9.

(Examples 3-11 to 3-13, 3-19, 3-20)

In Examples 3-11 to 3-13, 3-19, and 3-20, polymers were produced in the same manner as in Example 3-1, provided that an amount of the raw materials loaded in the reaction vessel 27 was changed to 90 g (Example 3-11), to 70g (Example 3-12), to 50 g (Example 3-13), to 30 g (Example 3-19), and to 10 g (Example 3-20). Physical properties of the obtained polymers were measured in the manners as described above. The results are presented in Tables 9 and 10.

(Examples 3-14 to 3-16)

In Examples 3-14 to 3-16, polymers were produced in the same manner as in Example 3-1, provided that the organic catalyst was changed to 1,4-diazabicyclo-[2.2.2]octane (DABCO) (Example 3-14), to 4-dimethylaminopyridine (DMAP) (Example 3-15), and to 1,3-di-tert-butylimidazol-2-ylidene (ITBU) (Example 3-16). Physical properties of the obtained polymers were measured in the manners as described above. The results are presented in Table 10.

(Examples 3-17 to 3-18)

In Examples 3-17 to 3-18, polymers were produced in the same manner as in Example 3-1, provided that the ring-opening polymerizable monomer was changed to ε-caprolactone in Example 3-17, and to ethylene carbonate in Example 3-18, the organic catalyst was changed to 1,5,7-triazabicyclo[4.4.0]dec-5-ene (TBD) in Example 3-17, and the polymerization reaction was carried out for 2 hours in each Example. Physical properties of the obtained polymers were measured in the manners as described above. The results are presented in Table 10.

Table 8

|  | Ex. 3-1 | Ex. 3-2 | Ex.3-3 | Ex. 3-4 | Ex. 3-5 | Ex. 3-6 | Ex. 3-7 |
|---|---|---|---|---|---|---|---|
| Catalyst | DBU | DBU | DBU | DBU | DBU | DBU | DBU |
| Monomer | Lactide | Lactide | Lactide | Lactide | Lactide | Lactide | Lactide |
| Mixing ratio | 0.92 | 0.92 | 0.92 | 0.92 | 0.90 | 0.91 | 0.94 |
| Amount of initiator (mol%) | 1.00 | 3.00 | 0.50 | 0.25 | 1.00 | 1.00 | 1.00 |
| Pressure (MPa) | 15 | 15 | 15 | 15 | 15 | 15 | 15 |
| Temperature (°C) | 60 | 60 | 60 | 60 | 40 | 50 | 80 |
| Reaction time (hr) | 0.5 | 0.5 | 0.5 | 0.5 | 0.5 | 0.5 | 0.5 |
| Mn | 11,000 | 5,100 | 23,000 | 57,000 | 12,000 | 10,000 | 10,000 |
| Polymerization rate (mol%) | 99 | 100 | 99 | 99 | 97 | 98 | 99 |

Table 9

|  | Ex. 3-8 | Ex. 3-9 | Ex. 3-10 | Ex. 3-11 | Ex. 3-12 | Ex. 3-13 |
|---|---|---|---|---|---|---|
| Catalyst | DBU | DBU | DBU | DBU | DBU | DBU |
| Monomer | Lactide | Lactide | Lactide | Lactide | Lactide | Lactide |
| Mixing ratio | 0.96 | 0.91 | 0.90 | 0.83 | 0.72 | 0.57 |
| Amount of initiator (mol%) | 1.00 | 1.00 | 1.00 | 1.00 | 1.00 | 1.00 |
| Pressure (MPa) | 10 | 20 | 30 | 15 | 15 | 15 |
| Temperature (°C) | 60 | 60 | 60 | 60 | 60 | 60 |
| Reaction time (hr) | 0.5 | 0.5 | 0.5 | 0.5 | 0.5 | 0.5 |
| Mn | 9,600 | 9,700 | 11,000 | 11,000 | 11,000 | 11,000 |
| Polymerization rate (mol%) | 99 | 100 | 99 | 99 | 97 | 97 |

Table 10

|  | Ex. 3-14 | Ex. 3-15 | Ex. 3-16 | Ex. 3-17 | Ex. 3-18 | Ex. 3-19 | Ex. 3-20 |
|---|---|---|---|---|---|---|---|
| Catalyst | DABCO | DMAP | ITBU | TBD | DBU | DBU | DBU |
| Monomer | Lactide | Lactide | Lactide | ε-caprolactone | Ethylene carbonate | Lactide | Lactide |
| Mixing ratio | 0.92 | 0.92 | 0.92 | 0.92 | 0.92 | 0.44 | 0.15 |
| Amount of initiator (mol%) | 1.00 | 1.00 | 1.00 | 1.00 | 1.00 | 1.00 | 1.00 |
| Pressure (MPa) | 15 | 15 | 15 | 15 | 15 | 15 | 15 |
| Temperature (°C) | 60 | 60 | 60 | 60 | 60 | 60 | 60 |
| Reaction time (hr) | 0.5 | 0.5 | 0.5 | 2 | 2 | 0.5 | 0.5 |
| Mn | 10,000 | 10,000 | 12,000 | 11,000 | 10,000 | 10,000 | 11,000 |
| Polymerization rate (mol%) | 92 | 96 | 99 | 96 | 95 | 94 | 88 |

Embodiments of the present invention are as follows:

<1> A method for producing a polymer, containing:

bringing a compressive fluid and a ring-opening polymerizable monomer into contact with each other, followed by adding a catalyst thereto, to thereby allow the ring-opening polymerizable monomer to carry out ring-opening polymerization.

<2> The method according to <1>, wherein the bringing is bringing the compressive fluid and the ring-opening polymerizable monomer into contact with each other to melt the ring-opening polymerizable monomer before the addition of the catalyst.

<3> The method according to any of <1> or <2>, wherein the catalyst is a metal-free organic catalyst.

<4> The method according to any one of <1> to <3>, wherein the bringing is performed under the condition represented by the following formula:

$$1 > \frac{\text{Mass of raw materials}}{\text{Mass of raw materials + Mass of compressive fluid}} \geq 0.5$$

<5> The method according to any one of <1> to <4>, wherein a polymerization rate of the ring-opening polymerizable monomer is 98 mol% or higher.

<6> The method according to any one of <1> to <5>, wherein the compressive fluid contains carbon dioxide.

<7> The method according to any one of <1> to <6>, wherein the catalyst is a basic nucleophilic nitrogen compound.

<8> The method according to <7>, wherein the catalyst is a nitrogen atom-containing cyclic compound.

<9> The method according to <8>, wherein the catalyst is at least one selected from the group consisting of cyclic monoamine, cyclic diamine, cyclic triamine, and a heterocyclic compound containing a nitrogen atom.

<10> The method according to <9>, wherein the catalyst is at least one selected from the group consisting of 1,4-diazabicyclo[2.2.2]octane, 1,8-diazabicyclo[5.4.0]undec-7-ene, 1,5,7-triazabicyclo[4.4.0]dec-5-ene, diphenyl guanidine, N,N-dimethyl-4-aminopyridine, 4-pyrrolidinopyridine, and 1,3-di-tert-butylimidazol-2-ylidene.

<11> The method according to any one of <1> to <10>, wherein the ring-opening polymerizable monomer is a monomer having a ring structure containing an ester bond therein.

<12> The method according to <11>, wherein the monomer having a ring structure containing an ester bond therein is cyclic ester or cyclic carbonate.

<13> The method according to <12>, wherein the cyclic ester is a cyclic dimer obtained through dehydration condensation of a compound represented by General Formula 1:

R-C*-H(-OH)(-COOH)          General Formula 1

where R is a C1-C10 alkyl group.

<14> The method according to <13>, wherein the cyclic dimer is lactide.

Reference Signs List

| | |
|---|---|
| 1: | tank |
| 2: | metering feeder |
| 3: | tank |
| 4: | metering feeder |
| 5: | tank |
| 6: | metering pump |
| 7: | tank |
| 8: | metering pump |
| 9: | melt blending device |
| 10: | liquid transfer pump |
| 11: | tank |
| 12: | metering pump |

13:     reaction vessel
14:     pressure adjusting valve
15:     polymer
21:     $CO_2$ bomb
22:     pump
23:     valve
24:     valve
25:     addition pot
26:     valve
27:     reaction vessel
28:     discharge valve
29:     valve
100:    polymerization reaction device
200:    polymerization reaction device
P:      polymer

**Claims**

1.  A method for producing a polymer, comprising:

    bringing a compressive fluid and a ring-opening polymerizable monomer into contact with each other to melt the ring-opening polymerizable monomer, followed by adding a catalyst thereto, to thereby allow the ring-opening polymerizable monomer to carry out ring-opening polymerization.

2.  The method according to claim 1, wherein the catalyst is a metal-free organic catalyst.

3.  The method according to claim 1 or 2, wherein the bringing is performed under the condition represented by the following formula:

$$1 \; > \; \frac{\text{Mass of raw materials}}{\text{Mass of raw materials} + \text{Mass of compressive fluid}} \; \geq \; 0.5$$

4.  The method according to any one of claims 1 to 3, wherein a polymerization rate of the ring-opening polymerizable monomer is 98 mol% or higher.

5.  The method according to any one of claims 1 to 4, wherein the compressive fluid contains carbon dioxide.

6.  The method according to any one of claims 1 to 5, wherein the catalyst is a basic nucleophilic nitrogen compound.

7.  The method according to claim 6, wherein the catalyst is a nitrogen atom-containing cyclic compound.

8.  The method according to claim 7, wherein the catalyst is at least one selected from the group consisting of cyclic monoamine, cyclic diamine, cyclic triamine, and a heterocyclic compound containing a nitrogen atom.

9.  The method according to claim 8, wherein the catalyst is at least one selected from the group consisting of 1,4-diazabicyclo[2.2.2]octane, 1,8-diazabicyclo[5.4.0]undec-7-ene, 1,5,7-triazabicyclo[4.4.0]dec-5-ene, diphenyl guanidine, N,N-dimethyl-4-aminopyridine, 4-pyrrolidinopyridine, and 1,3-di-tert-butylimidazol-2-ylidene.

10. The method according to any one of claims 1 to 9, wherein the ring-opening polymerizable monomer is a monomer having a ring structure containing an ester bond therein.

11. The method according to claim 10, wherein the monomer having a ring structure containing an ester bond therein is cyclic ester or cyclic carbonate.

12. The method according to claim 11, wherein the cyclic ester is a cyclic dimer obtained through dehydration condensation of a compound represented by General Formula 1:

R-C*-H(-OH)(-COOH)            General Formula 1

where R is a C1-C10 alkyl group.

**13.** The method according to claim 12, wherein the cyclic dimer is lactide.

**Patentansprüche**

**1.** Verfahren zur Herstellung eines Polymers, umfassend:

Bringen eines Druckfluids und eines ringöffnenden polymerisierbaren Monomers in Kontakt miteinander zwecks Schmelzens des ringöffnenden polymerisierbaren Monomers, gefolgt von Zugeben eines Katalysators dazu, um dadurch das ringöffnende polymerisierbare Monomer ringöffnende Polymerisation ausführen zu lassen.

**2.** Verfahren nach Anspruch 1, wobei der Katalysator ein metallfreier organischer Katalysator ist.

**3.** Verfahren nach Anspruch 1 oder 2, wobei das Bringen unter der Bedingung durchgeführt wird, die durch die folgende Formel dargestellt ist:

$$1 > \frac{\text{Masse von Rohmaterialien}}{\text{Masse von Rohmaterialien} + \text{Masse von Druckfluid}} \geq 0.5$$

**4.** Verfahren nach einem der Ansprüche 1 bis 3, wobei eine Polymerisationsrate des ringöffnenden polymerisierbaren Monomers 98 mol% oder höher ist.

**5.** Verfahren nach einem der Ansprüche 1 bis 4, wobei das Druckfluid Kohlendioxid enthält.

**6.** Verfahren nach einem der Ansprüche 1 bis 5, wobei der Katalysator eine basische nukleophile Stickstoffverbindung ist.

**7.** Verfahren nach Anspruch 6, wobei der Katalysator eine stickstoffatomhaltige cyclische Verbindung ist.

**8.** Verfahren nach Anspruch 7, wobei der Katalysator zumindest einer ist, der aus der Gruppe ausgewählt ist, die besteht aus cyclischem Monoamin, cyclischem Diamin, cyclischem Triamin und einer heterocyclischen Verbindung, die ein Stickstoffatom enthält.

**9.** Verfahren nach Anspruch 8, wobei der Katalysator zumindest einer ist, der aus der Gruppe ausgewählt ist, die besteht aus 1,4-Diazabicyclo[2.2.2]octan, 1,8-Diazabicyclo[5.4.0]undec-7-en, 1,5,7-Triazabicyclo[4.4.0]dec-5-en, Diphenylguanidin, N,N-Dimethyl-4-aminopyridin, 4-Pyrrolidinopyridin und 1,3-Di-tert-butylimidazol-2-yliden.

**10.** Verfahren nach einem der Ansprüche 1 bis 9, wobei das ringöffnende polymerisierbare Monomer ein Monomer mit einer Ringstruktur ist, die eine Esterbindung in derselben enthält.

**11.** Verfahren nach Anspruch 10, wobei das Monomer mit einer Ringstruktur, die eine Esterbindung in derselben enthält, cyclischer Ester oder cyclisches Carbonat ist.

**12.** Verfahren nach Anspruch 11, wobei der cyclische Ester ein cyclisches Dimer ist, das durch Dehydrierungskondensation einer Verbindung erhalten wird, die durch die Allgemeine Formel 1 dargestellt ist:

R-C*-H(-OH)(-COOH)            Allgemeine Formel 1,

worin R eine C1-C10-Alkylgruppe ist.

**13.** Verfahren nach Anspruch 12, wobei das cyclische Dimer Lactid ist.

**Revendications**

**1.** Procédé de production d'un polymère, comprenant les étapes consistant à :

mettre un fluide compressif et un monomère pouvant polymériser par ouverture de cycle en contact l'un avec l'autre afin de faire fondre le monomère pouvant polymériser par ouverture de cycle, puis ajouter un catalyseur, afin de permettre ainsi au monomère pouvant polymériser par ouverture de cycle de réaliser une polymérisation par ouverture de cycle.

**2.** Procédé selon la revendication 1, dans lequel le catalyseur est un catalyseur organique sans métal.

**3.** Procédé selon la revendication 1 ou 2, dans lequel l'étape de mise en contact est mise en oeuvre dans les conditions représentées par la formule ci-dessous :

$$1 > \frac{\text{masse de matières premières}}{\text{masse de matières premières} + \text{masse de fluide compressif}} \geq 0.5$$

**4.** Procédé selon l'une quelconque des revendications 1 à 3, dans lequel une vitesse de polymérisation du monomère pouvant polymériser par ouverture de cycle est supérieure ou égale à 98 % molaire.

**5.** Procédé selon l'une quelconque des revendications 1 à 4, dans lequel le fluide compressif contient du dioxyde de carbone.

**6.** Procédé selon l'une quelconque des revendications 1 à 5, dans lequel le catalyseur est un composé azote nucléophile basique.

**7.** Procédé selon la revendication 6, dans lequel le catalyseur est un composé cyclique contenant un atome d'azote.

**8.** Procédé selon la revendication 7, dans lequel le catalyseur est au moins un catalyseur sélectionné parmi le groupe constitué de monoamine cyclique, diamine cyclique, triamine cyclique, et un composé hétérocyclique contenant un atome d'azote.

**9.** Procédé selon la revendication 8, dans lequel le catalyseur est au moins un catalyseur sélectionné parmi le groupe constitué de 1,4-diazabicyclo[2.2.2]octane, 1,8-diazabicyclo[5.4.0]undéc-7-ène, 1,5,7-triazabicyclo[4.4.0]déc-5-ène, diphénylguanidine, N,N-diméthyl-4-aminopyridine, 4-pyrrolidinopyridine, et 1,3-di-tert-butylimidazol-2-ylidène.

**10.** Procédé selon l'une quelconque des revendications 1 à 9, dans lequel le monomère pouvant polymériser par ouverture de cycle est un monomère présentant une structure cyclique contenant une liaison ester en son sein.

**11.** Procédé selon la revendication 10, dans lequel le monomère présentant une structure cyclique contenant une liaison ester en son sein est un ester cyclique ou un carbonate cyclique.

**12.** Procédé selon la revendication 11, dans lequel l'ester cyclique est un dimère cyclique obtenu par déshydratation-condensation d'un composé représenté par la formule générale 1 :

R-C*-H(-OH)(-COOH)          Formule générale 1

où R est un groupe alkyle en C1-C10

**13.** Procédé selon la revendication 12, dans lequel le dimère cyclique est un lactide.

# FIG. 1

# FIG. 2

# FIG. 3

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008063420 A
- JP 2009001614 A
- EP 2365016 A
- JP 47015526 B
- JP 47015527 A
- JP 47015528 A
- JP 47015533 A
- JP 47033166 A

**Non-patent literature cited in the description**

- **GANAPATHY, H. S. ; HWANG, H. S. ; JEONG, Y. T. ; LEE, W-T. ; LIM, K. T.** *Eur Polym J.,* 2007, vol. 43 (1), 119-126
- **IDRISS BLAKEY ; ANGUANG YU ; STEVEN M. HOWDLE ; ANDREW K. WHITTAKERA ; KRISTOFER J. THURECHTA.** *Green Chemistry,* 2011
- The Latest Applied Technology of Supercritical Fluid. NTS Inc, 15 March 2004, 173
- Guanidine and Aminidine Organocatalysts for Ring-opening Polymerization of Cyclic Esters. **BAS G G LOHMEIJER et al.** MACROMOLECULES. AMERICAN CHEMICAL SOCIETY, 11 November 2006, vol. 39, 8574-8583